(19) Europäisches Patentamt
European Patent Office
Office européen des brevets

(11) **EP 3 134 662 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(21) Anmeldenummer: **15711781.3**

(22) Anmeldetag: **25.03.2015**

(51) Int Cl.:
*F16H 61/00* (2006.01)     *F16H 61/02* (2006.01)
*F16H 61/688* (2006.01)

(86) Internationale Anmeldenummer:
**PCT/EP2015/056334**

(87) Internationale Veröffentlichungsnummer:
**WO 2015/161973 (29.10.2015 Gazette 2015/43)**

(54) **HYDRAULIKSYSTEM EINES GETRIEBES MIT MEHREREN DRUCKREGELVENTILEN**

HYDRAULIC SYSTEM OF A TRANSMISSION WITH A PLURALITY OF PRESSURE REGULATING VALVES

SYSTÈME HYDRAULIQUE D'UNE TRANSMISSION COMPRENANT PLUSIEURS SOUPAPES DE RÉGULATION DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2014 DE 102014207808**

(43) Veröffentlichungstag der Anmeldung:
**01.03.2017 Patentblatt 2017/09**

(73) Patentinhaber: **ZF Friedrichshafen AG**
**88046 Friedrichshafen (DE)**

(72) Erfinder:
• **NOVAK, Rainer**
**A-6900 Bregenz (AT)**
• **PFLEGER, Tobias**
**88677 Markdorf (DE)**
• **HOFFMANN, Alexander**
**66822 Lebach (DE)**
• **TERWART, Markus**
**97711 Thundorf (DE)**

(56) Entgegenhaltungen:
DE-A1- 19 943 939       DE-A1-102006 049 972
DE-A1-102009 002 105    DE-A1-102010 001 069
DE-A1-102011 078 113

EP 3 134 662 B1

## Beschreibung

Die Erfindung betrifft ein Hydrauliksystem eines Getriebes mit mehreren Druckregelventilen gemäß der im Oberbegriff des Patentanspruches 1 näher definierten Art. DE19943939 offenbart die Merkmale des Oberbegriffes des Anspruchs 1.

Um ein Leerlaufen von hydraulischen Leitungen von aus der Praxis bekannten Hydrauliksystemen von Getrieben zu verhindern, stehen Druckregelventile der Hydrauliksysteme, wie Kupplungsventile oder ein einer Hang-On-Kupplung zugeordnetes weiteres Kupplungsventil, mit sogenannten Vorbefüllventilen in Wirkverbindung. Üblicherweise teilen sich mehrere Druckregelventile von Hydrauliksystemen bzw. hydraulischen Betätigungsvorrichtungen von Getrieben ein gemeinsames Vorbefüllventil. Im Bereich der Vorbefüllventile wird jeweils ein gewisser Mindestdruck in Hydraulikleitungen eingestellt, wobei typische Werte zwischen 0,2 bis 0,4 bar vorliegen. Konstruktiv sind sie zumeist als federbelastete Sitzventile, wie Plattenventile, ausgeführt. Vorbefüllventile selbst können den konstanten Vorbefülldruck nur dann einregeln, wenn ein definierter Mindestdurchfluss zu dem zugehörigen hydraulischen Kontrollvolumen vorhanden ist. Wird der Mindestdurchfluss beispielsweise über zugehörige Ventilleckagen erreicht, ist das zugehörige Druckniveau kurz nach einem Start der Antriebsmaschine nicht definiert.

Aus Bauraum- und Kostengründen ist man zudem üblicherweise bemüht, die Anzahl der Vorbefüllventile zu minimieren. Dies führt jedoch nachteilhafterweise dazu, dass die zugehörige Netzwerktopologie deutlich komplexer wird, da mindestens zwei, oftmals bis zu fünf Druckregelventile an einen gemeinsamen Kanal anzubinden sind, der wiederum über ein entsprechendes Vorbefüllventil dann mit einem Niederdruckbereich bzw. einem Ölsumpf verbunden ist. Die Reduzierung der Anzahl der Bauteile wird also mit einer aufwändigeren Leitungsführung erzielt. Wird eine jeweils zugehörige Vorsteuerstufe bzw. ein jeweils zugehöriges Vorsteuerdruckregelventil nicht bestromt, liegt vom zugehörigen Aktuator immer das Vorbefülldruckniveau an.

Bislang bekannte Hydrauliksysteme, die mit einer möglichst geringen Anzahl an Vorbefüllventilen für mehrere Druckregelventile ausgeführt sind, weisen unter anderem folgende Nachteile auf:

Da die Aktuatoren, die Kupplungen, Schaltzylinder und dergleichen über die Vorbefüllleitungen entleert werden, sind die zugehörigen Leitungsquerschnitte vergleichsweise groß zu dimensionieren. Zusätzlich durchkreuzen die Vorbefüllleitungen je nach Anzahl der angebundenen Ventile das gesamte Gehäuse der Betätigungsvorrichtung. Dieser dafür erforderliche Bauraum steht nachteilhafterweise für die Entflechtung der restlichen Netzwerktopologie nicht mehr zur Verfügung.

Des Weiteren ist von Nachteil, dass die trotz der großen Kanalquerschnitte bei niedrigen Betriebstemperaturen wirksamen Leitungswiderstände deutlich verlängerte Ausschiebezeiten im Bereich der Kupplungen verursachen. Je nachdem, wie weit der Tankanschluss eines 3/2-Druckregelventils vom zugehörigen Vorbefüllventil entfernt ist, können diese Entleerzeiten zusätzlich auch deutlich streuen. Aus diesem Grund kann der Temperaturgang für Entleervorgänge die Spontaneität einzelner Schaltungen in nicht vernachlässigbarem Umfang beeinträchtigen. Darüber hinaus ist auch von Nachteil, dass eine aus Genauigkeitsgründen benötigte aktive Vorbefüllung Leckageverluste verursacht, die den Gesamtwirkungsgrad verringern.

Beim Öffnen einer Kupplung, d. h. bei einem schnellen Entleeren von mindestens einem der angeschlossenen Druckregelventile über ein Vorbefüllventil, tritt im Bereich der Vorbefüllleitung ein kurzzeitiger Druckanstieg auf. Alle anderen, vorzugsweise geöffneten Kupplungen bzw. Gangaktuatoren, werden dann über ihr gemeinsames Vorbefülldruckniveau mit einem höheren Druckniveau beaufschlagt. Während derartiger Betriebssituationen kann beispielsweise keine Kalibrierung einer Drucksensorik durchgeführt werden. Sind im Bereich der Vorbefüllleitungen keine aktiven Vorbefüllungen in Abhängigkeit der aktuell vorliegenden Betriebstemperatur des Hydraulikfluidvolumens vorgesehen, besteht nachteilhafterweise die Möglichkeit, dass die Zeitspanne, die bis zum korrekten Wiederaufbau des Vorbefülldrucks vergeht, durchaus größer als 10 Sekunden sein kann. Somit sind besonders bei niedrigen Betriebstemperaturen eines Getriebes kaum Kalibiervorgänge durchführbar.

Die Druckregelventile sind meist als sogenannte federbelastete Schieberventile ausgeführt. Das bedeutet, dass die Ventilschieber der Druckregelventile ohne entsprechende Ansteuerung durch die zugehörige Vorsteuerstufe von der jeweils anliegenden Federkraft gegen einen mechanischen Endanschlag geführt werden. Die Ventilschieber der Druckregelventile überfahren dabei vergleichsweise große Stellwege, um ausreichende Öffnungsquerschnitte zwischen einem Tankanschluss der Druckregelventile und der jeweils zugehörigen Vorbefüllleitung sicherzustellen. Sobald die zugehörigen Vorsteuerstufen jeweils einen Vorsteuerdruck im Bereich der Druckregelventile anlegen, sind die Ventilschieber jeweils gegen die Federkraft aus der aktuell vorliegenden Endstellung zu verschieben. Die großen Stellwege verursachen im Steuer- und Regelverhalten deutliche Totzeiten zwischen dem Ansteuersignal und dem Zeitpunkt, zu dem sich der angeforderte Arbeitsdruck bzw. Kupplungsdruck einstellt. Dabei nimmt die Spontaneität des Druckaufbaus umso stärker ab, je größer der vom Ventilschieber jeweils zu durchfahrende Stellweg ist.

Der vorliegenden Erfindung liegt daher die Aufgabe zugrunde, ein Hydrauliksystem eines Getriebes mit mehreren Druckregelventilen zur Verfügung zu stellen, mit dem die vorbeschriebenen Nachteile vermieden werden.

Erfindungsgemäß wird diese Aufgabe mit einem Hydrauliksystem mit den Merkmalen des Patentanspruches 1 gelöst.

Das erfindungsgemäße Hydrauliksystem eines Getriebes umfasst mehrere Druckregelventile, in deren Bereich ein anliegender Druck in Abhängigkeit einer jeweils an einem Ventilschieber betriebszustandsabhängig angreifenden Gesamtkraftkomponente auf ein stromab einzustellendes Druckniveau einregelbar ist. Die Gesamtkraftkomponente stellt sich in Abhängigkeit einer jeweils am Ventilschieber anlegbaren Vorsteuerkraftkomponente, einer Betätigungskraftkomponente und einer in Abhängigkeit des stromab vorliegenden Druckniveaus stehenden Regelkraftkomponente ein.

Erfindungsgemäß sind die Vorsteuerkraftkomponente und die Betätigung der Kraftkomponente jeweils gleichwirkend in Richtung einer ersten Endstellung eines Ventilschiebers eines Druckregelventils am Ventilschieber anlegbar, in der der Bereich stromauf des Druckregelventils mit dem Bereich stromab des Druckregelventils über das Druckregelventil verbunden ist, während der Druck stromab des Druckregelventils der Vorsteuerkraftkomponente und der Betätigungskraftkomponente entgegenwirkend und in Richtung einer zweiten Endstellung des Ventilschiebers am Ventilschieber anlegbar ist, in der der Bereich stromab des Druckregelventils mit einem Niederdruckbereich verbunden ist.

Bei dem erfindungsgemäßen Hydrauliksystem ist jedes der Druckregelventile direkt an den Niederdruckbereich bzw. einen Ölsumpf angeschlossen, wobei dieser Anschluss konstruktiv direkt in einer zugehörigen Gusstasche ausgeführt sein kann. Um ein Leerlaufen in diesem Bereich des Hydrauliksystems bzw. im Bereich der Druckregelventile und der stromab der Druckregelventile vorliegenden Hydraulikleitungen zu vermeiden, ist jeweils am Ventilschieber eines Druckregelventiles die Betätigungskraftkomponente anlegbar, die zur jeweils anlegbaren Vorsteuerkraftkomponente gleichwirkend am Ventilschieber angreift. Damit ist bei nicht anliegender Vorsteuerkraftkomponente ohne ein zugeordnetes Vorbefüllventil im Bereich der Druckregelventile jeweils ein eigener Vorbefülldruck über die Betätigungskraftkomponente einregelbar.

Des Weiteren sind durch die gleichwirkend an einem Ventilschieber einer der Druckregelventile anliegenden Vorsteuerkraft- und Betätigungskraftkomponenten bei einem Anlegen der Vorsteuerkraftkomponente zusätzlich zur Betätigungskraftkomponente vom Ventilschieber nur kleine Stellwege zu überwinden, womit die Spontaneität eines Druckaufbaus bei dem erfindungsgemäßen Hydrauliksystem wesentlich höher ist als bei bekannten Hydrauliksystemen.

Darüber hinaus sind zur Entlüftung von Aktuatoren, Kupplungen, Schaltzylindern und dergleichen vorgesehene Leitungen bzw. deren Leitungsquerschnitte jeweils lediglich zwischen den Druckregelventilen und diesen Baugruppen entsprechend groß zu dimensionieren, womit ein Bauraumbedarf des erfindungsgemäßen Hydrauliksystems im Vergleich zu bekannten Systemen reduziert ist. Bei dem erfindungsgemäßen Hydrauliksystem sind Ausschiebezeiten im Bereich von Kupplungen kürzer als bei herkömmlichen Hydrauliksystemen, da die Länge von zwischen den Kupplungen und dem Niederdruckbereich verlaufenden Leitungen bei dem erfindungsgemäßen Hydrauliksystem kürzer ausführbar sind als bei bekannten Hydrauliksystemen.

Unerwünschte kurzzeitige Druckanstiege, die beispielsweise beim Öffnen einer Kupplung im Bereich einer Vorbefüllleitung auftreten, liegen beim erfindungsgemäßen Hydrauliksystem aufgrund der nicht vorhandenen Kopplung nicht im Bereich weiterer mit Hydraulikdruck zu betätigender Getriebekomponenten an, womit beispielsweise eine Kalibrierung einer Drucksensorik in gewünschtem Umfang durchführbar ist.

Ist zumindest ein Teil der Druckregelventile direkt mit einem einen Druck eines Primärdruckkreises führenden Bereich des erfindungsgemäßen Hydrauliksystems gekoppelt, ist ein stromab der Druckregelventile einzustellendes Druckniveau auf konstruktiv einfache Art und Weise einregelbar.

Bei der beanspruchten Ausführungsform des erfindungsgemäßen Hydrauliksystems ist ein Teil der Druckregelventile, nämlich die Kupplungsventile, über eine vorsteuerbare Ventileinheit mit einem einen Druck eines Primärdruckkreises führenden Bereich oder mit einer weiteren Ventileinheit in Wirkverbindung bringbar, wobei die weitere Ventileinheit als Druckbegrenzungsventil ausgeführt ist und stromauf der weiteren Ventileinheit ein vordefiniertes Druckniveau einstellt und stromab mit einem Niederdruckbereich in Verbindung steht.

Bei dieser Ausführungsform des erfindungsgemäßen Hydrauliksystems treten die aus der Praxis bekannten Nachteile nicht auf. Zusätzlich ist auch ein Leerlaufen eines Leitungsbereiches des erfindungsgemäßen Hydrauliksystems zwischen der vorsteuerbaren Ventileinheit und den damit zusammenwirkenden Druckregelventilen mit geringem konstruktivem Aufwand vermieden.

Ist die Vorsteuerkraftkomponente in Abhängigkeit eines im Bereich eines Vorsteuerdruckregelventils einstellbaren Vorsteuerdrucks einstellbar, der im Bereich einer Steuerfläche des Ventilschiebers eines der Druckregelventile anlegbar ist, ist das stromab des Druckregelventils einzustellende Druckniveau mit geringem Bauraumbedarf einregelbar.

Entspricht die Betätigungskraftkomponente einer am Ventilschieber eines der Druckregelventile angreifenden Federkraft einer Federeinrichtung, ist das erfindungsgemäße Hydrauliksystem mit geringem Steuer- und Regelaufwand betreibbar.

Bei einer konstruktiv einfachen und kostengünstigen Ausführung des erfindungsgemäßen Hydrauliksystems sind die Druckregelventile als 3/2-Wegeventile ausgeführt.

Sowohl die in den Patentansprüchen angegeben Merkmale als auch die in den nachfolgenden Ausführungsbeispielen des erfindungsgemäßen Hydrauliksystems bzw. der erfindungsgemäßen hydraulischen Betätigungsvorrichtung angegebenen Merkmale sind jeweils für sich alleine oder in beliebiger Kombination miteinander geeignet den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Hydrauliksystems ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:

Fig. 1    ein Hydraulikschema einer ersten Ausführungsform des erfindungsgemäßen Hydrauliksystems bzw. der erfindungsgemäßen hydraulischen Betätigungsvorrichtung;

Fig. 2    eine schematisierte Darstellung eines Gehäuses mit einer Schnittstelleneinrichtung der Betätigungsvorrichtung gemäß Fig. 1;

Fig. 3    eine Einzeldarstellung einer Ventileinrichtung der hydraulischen Betätigungsvorrichtung gemäß Fig. 1 in einem ersten Betriebszustand;

Fig. 4    eine Fig. 3 entsprechende Darstellung der Ventileinrichtung gemäß Fig. 3 in einem zweiten Betriebszustand;

Fig. 5    die Ventileinrichtung gemäß Fig. 3 in einem dritten Betriebszustand;

Fig. 6    mehrere Verläufe von von einem Ventilschieber der Ventileinrichtung gemäß Fig. 3 freigebbaren Öffnungsflächen über einem Stellweg des Ventilschiebers zwischen einer ersten Endstellung und einer zweiten Endstellung des Ventilschiebers;

Fig. 7    Verläufe verschiedener Verteilungsgrade eines Hydraulikfluidvolumenzuflusses der Ventileinrichtung gemäß Fig. 3 über dem Stellweg des Ventilschiebers der Ventileinrichtung;

Fig. 8    eine stationäre Kennlinie einer als Stauventil ausgeführten Steuerund Regelkomponente der hydraulischen Betätigungsvorrichtung gemäß Fig. 1;

Fig. 9    einen Teilbereich eines Hydraulikschemas einer Weiterbildung der ersten Ausführungsform der erfindungsgemäßen hydraulischen Betätigungsvorrichtung gemäß Fig. 1;

Fig. 10    eine Fig. 9 entsprechende Darstellung einer weiteren Ausführungsform der erfindungsgemäßen hydraulischen Betätigungsvorrichtung gemäß Fig. 1;

Fig. 11    eine Fig. 9 entsprechende Darstellung einer weiteren Ausführungsform der erfindungsgemäßen hydraulischen Betätigungsvorrichtung gemäß Fig. 1;

Fig. 12    ein hydraulisches Ersatzschaltbild der Ventileinrichtung gemäß Fig. 3 bis Fig. 5 für ein Getriebe mit zwei Hydraulikpumpen und einem gemeinsamen Ölraum;

Fig. 13    mehrere Verläufe von Verteilungsfaktoren eines Hydraulikfluidvolumenzuflusses der Ventileinrichtung gemäß Fig. 12 über einem Betätigungsstrom eines der Ventileinrichtung zugeordneten elektrohydraulischen Aktuators;

Fig. 14    ein Flussdiagramm einer Vorgehensweise zum Bestimmen eines optimalen Ansteuerbereiches der Ventileinrichtung gemäß Fig. 12;

Fig. 15    Kennlinien der Hydraulikpumpen in Abhängigkeit eines Stellwegs des Ventilschiebers der Ventileinrichtung gemäß Fig. 12 für die Versorgung eines Doppelkupplungssystems des die Betätigungsvorrichtung des Fig. 1 umfassenden Getriebes; und

Fig. 16    einen Teil eines Hydraulikschemas einer weiteren Ausführungsform der erfindungsgemäßen hydraulischen Betätigungsvorrichtung.

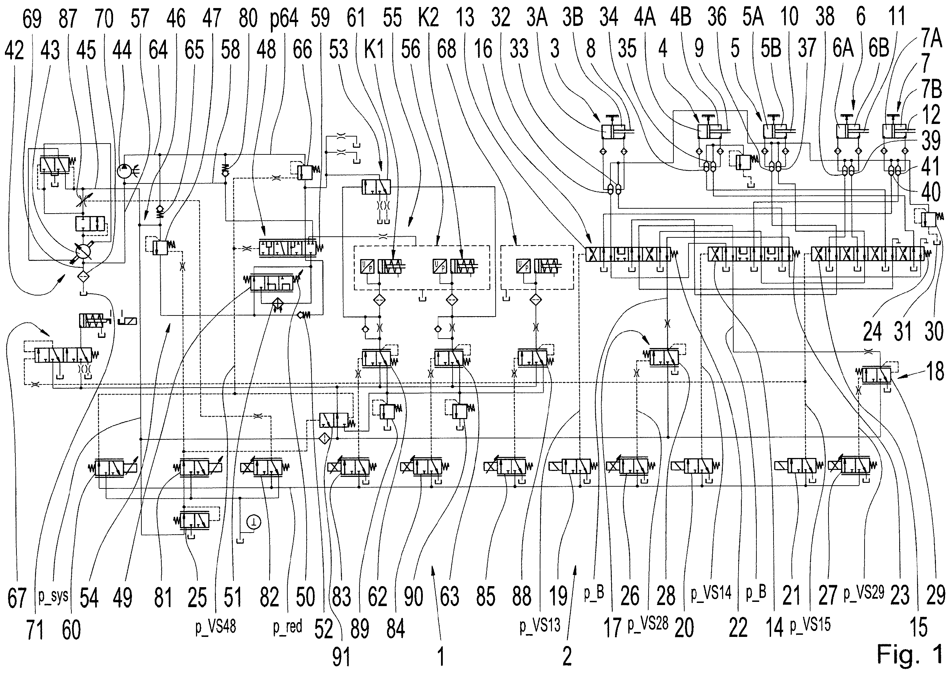

Fig. 1 zeigt ein Hydraulikschema eines Hydrauliksystems 1 bzw. einer hydraulischen Betätigungsvorrichtung eines vorliegend als Doppelkupplungsgetriebe ausgeführten Getriebes 2, in dem neun Übersetzungen für Vorwärtsfahrt und eine Übersetzung für Rückwärtsfahrt einlegbar sind. Die Übersetzungen sind über fünf hydraulisch betätigbare Kolben-Zylinder-Einrichtungen 3 bis 7 verstellbare Schaltelemente 8 bis 12 ein- und auslegbar, die vorliegend als Schaltstangen ausgebildet sind. Ein Betätigungsdruck p_B ist über eine vorliegend drei vorgesteuerte und miteinander über Leitungen gekoppelte Schaltventile 13 bis 15 umfassende Ventileinrichtung 16 im Bereich der Kolben-Zylinder-Einrichtungen 3 bis 7 bzw. im Bereich von Kolbenräumen 3A, 3B bzw. 4A, 4B bzw. 5A, 5B bzw. 6A, 6B bzw. 7A, 7B anlegbar. Die Schaltventile 13 bis 15 weisen zur Darstellung der Übersetzungen jeweils mehrere Schaltstellungen auf. Der Betätigungsdruck p_B ist im Bereich von zwei Druckregelventileinheiten 17, 18 frei einstellbar und in Richtung der Schaltventile 13 bis 15 weiterleitbar.

Die Schaltventile 13 bis 15 sind jeweils über eine als Magnetventil ausgeführte Vorsteuerdruckventileinheit 19, 20 und 21 mit Vorsteuerdruck p_VS13, p_VS14 bzw. p_VS15 in Richtung einer Schaltstellung entgegen jeweils einer Federeinrichtung 22, 23 bzw. 24 beaufschlagbar, die jeweils an einem der Schaltventile 13 bis 15 in Richtung einer ersten Schaltstellung angreifen. Die Vorsteuerdrücke p_VS13, p_VS14 und p_VS15 der Schaltventile 13 bis 15 sind in Abhängigkeit der jeweils vorliegenden Schaltstellung der Vorsteuerdruckventileinheit 19, 20 oder 21 entweder gleich Null oder entsprechen einem Druckwert eines Drucksignales p_red, das im Bereich eines Druckreduzierventiles 25 in Abhängigkeit eines Systemdruckes p_sys einstellbar ist.

Die Druckregelventileinheiten 17 und 18 umfassen jeweils ein Vorsteuerdruckregelventil 26, 27 und jeweils ein Druckregelventil 28, 29. Im Bereich der Druckregelventile 28 und 29 ist jeweils der Versorgungsdruck bzw. der Systemdruck p_sys über einen im Bereich der Vorsteuerdruckregelventile 26 und 27 jeweils vorgebbaren und im Bereich der Druckregelventile 28 und 29 jeweils anlegbaren Vorsteuerdruck p_VS28 bzw. p_VS29 auf ein jeweils angefordertes Druckniveau des Betätigungsdruckes p_B einstellbar.

Im unbestromten Betriebszustand der Vorsteuerdruckventileinheiten 19 bis 21 sind die Schaltventile 13 bis 15 von den jeweils zugeordneten Federeinrichtungen 22, 23, 24 jeweils in ihre in Fig. 1 dargestellte erste Schaltstellung umgeschoben. In diesem Betriebszustand der Ventileinrichtung 16 sind die Druckregelventile 28 und 29 der Druckregelventileinheiten 17 und 18 von den Kolben-Zylinder-Einrichtungen 3 bis 7 getrennt. Falls dennoch im Bereich der Druckregelventile 28 und 29 ein Betätigungsdruck p_B eingestellt wird, wird der Betätigungsdruck p_B über die Schaltventile 13 bis 15 nicht in Richtung der Kolben-Zylinder-Einrichtungen 3 bis 7 weitergeleitet. Im Bereich zwischen den Schaltventilen 13 bis 15 und den Kolben-Zylinder-Einrichtungen 3 bis 7 ist ein Druckbegrenzungsventil 30 über sogenannte Kugelwechselventile 32 bis 41 mit den Kolbenräumen 3A bis 7B in Wirkverbindung bringbar. Über das Druckbegrenzungsventil 30 ist somit im Bereich der Kolbenräume 3A bis 7B jeweils ein Druckniveau einstellbar, über das ein Leerlaufen der Kolbenräume 3A bis 7B auf einfache Art und Weise vermieden wird. Oberhalb des Ansprechdruckniveaus des Druckbegrenzungsventiles 30 öffnet dieses und Hydraulikfluid wird in Richtung eines Niederdruckbereiches 31 über das Druckbegrenzungsventil 30 geführt.

In Abhängigkeit des jeweils vorliegenden Anwendungsfalles besteht auch die Möglichkeit, die Ventileinrichtung 16 ohne die beiden Druckregelventile 28 und 29 auszuführen, wobei dann der Versorgungsdruck p_sys im Bereich der als direkt gesteuerte Druckregelventile ausgeführten Vorsteuerdruckregelventile 26 und 27 anzulegen ist und dort das jeweils geforderte Druckniveau des Betätigungsdruckes p_B direkt eingestellt und in Richtung der Schaltventile 13 bis 15 weitergeleitet wird.

Die Betätigungsvorrichtung 1 ist zusätzlich mit einer Pumpeneinrichtung 42 mit zwei Pumpeneinheiten 43, 44 gekoppelt, wobei die erste Pumpeneinheit 42 als verstellbare Flügelzellenpumpe und die zweite Pumpeneinheit 44 als Konstantpumpe ausgebildet ist.

Die erste Pumpeneinheit 43 stellt vorliegend die Getriebehauptpumpe dar, die mit einer in der Zeichnung nicht näher dargestellten Getriebeeingangswelle in an sich bekannter Art und Weise gekoppelt ist und somit von einer mit der Getriebeeingangswelle des Getriebes 2 verbindbaren Antriebsmaschine, vorzugsweise einer Brennkraftmaschine, antreibbar ist. Im Unterschied hierzu ist die zweite Pumpeneinheit 44 mit der Getriebeausgangswelle gekoppelt, die wiederum in an sich bekannter Art und Weise mit einem Abtrieb eines mit dem Getriebe 2 ausgeführten Fahrzeugantriebsstranges verbindbar ist und mit einer zur Abtriebsdrehzahl äquivalenten Antriebsdrehzahl antreibbar ist. Eine Druckseite 45 der ersten Pumpeneinheit 43 steht mit einem Primärdruckkreis 46 in Verbindung, in dem der Systemdruck p_sys vorliegt, der wiederum über ein vorsteuerbares Systemdruckventil 47 einstellbar ist. Stromab des Systemdruckventiles 47 ist eine ebenfalls vorsteuerbare Ventileinrichtung 48 vorgesehen, die ein als Steuerventil ausgebildetes sogenanntes Kühlventil darstellt.

Zusätzlich ist dem Kühlventil 48 ein sogenanntes Thermobypassventil 49 zugeordnet, das mit einem Thermoelement 50 ausgeführt ist, um einen über einen Kühler 51 geführten Hydraulikfluidvolumenstrom in Abhängigkeit einer aktuell vorliegenden Betriebstemperatur in gewünschtem Umfang einstellen zu können. Das Systemdruckventil 47 ist vorliegend über ein Bypassventil 52 oberhalb einer Ansprechgrenze des Bypassventiles 52 direkt mit Kühlventil 48 verbunden. Unterhalb der Ansprechgrenze des Bypassventiles 52 wird das stromab des Systemdruckventiles 47 in Richtung des Kühlventiles 48 geführte Hydraulikfluidvolumen in Abhängigkeit des jeweils vorliegenden Betriebszustandes des Thermobypassventiles 49 entweder vollständig in Richtung des Kühlventiles 48 weitergeleitet, zum einen Teil direkt in Richtung des Kühlventiles 48 und zum anderen Teil über den Kühler 51 in Richtung des Kühlventiles 48 geführt oder vollständig über den Kühler 51 und anschließend in Richtung des Kühlventiles 48 weitergeleitet.

In der in Fig. 1 dargestellten ersten Schaltstellung des Kühlventils 48 ist der Primärdruckkreis 46 mit einem ersten Bereich 53 eines stromab des Systemdruckventiles 47 vorliegenden Sekundärdruckkreises 54 verbunden. In einer zweiten Schaltstellung des Kühlventiles 48 ist der Primärdruckkreis 46 über das Kühlventil 48 sowohl mit dem ersten Bereich 53 des Sekundärdruckkreises 54 als auch mit einem zweiten Bereich 55 des Sekundärdruckkreises 54 verbunden, über den zwei Kupplungen K1 und K2 eines Doppelkupplungssystems 56 des Getriebes 2 mit der betriebszustandsabhängig jeweils erforderlichen Kühlölmenge beaufschlagbar sind. Eine Saugseite 57 der zweiten Pumpeneinheit 44 ist sowohl in der ersten Schaltstellung als auch in der zweiten Schaltstellung des Kühlventils 48 im Bereich des Kühlventils 48 vom Systemdruckventil 47 getrennt.

Wird das Kühlventil 48 über einen entgegen einer am Kühlventil 48 angreifenden Federkraft einer Federeinrichtung 59 von einem im Bereich eines weiteren Vorsteuerdruckregelventils 60 einstellbaren Vorsteuerdruck p_VS48 in eine dritte Schaltstellung überführt, ist der Primärdruckkreis 46 über das Kühlventil 48 mit dem zweiten Bereich 55 des Sekundärdruckkreises 54 verbunden, womit das vom Primärdruckkreis 46 über das Systemdruckventil 47 in den Sekundärdruckkreis 54 eingeleitete Hydraulikfluidvolumen vollständig zur Kühlung des Doppelkupplungssystems 56 verwendet wird.

Der erste Bereich 53 des Sekundärdruckkreises 54 umfasst vorliegend eine sogenannte Schmierspinne, über die verschiedene Komponenten des Getriebes 2 mit Hydraulikfluid zum Schmieren und Kühlen beaufschlagt werden. Zusätzlich wird über den ersten Bereich 53 des Sekundärdruckkreises 54 auch eine Radsatzkühlung durchgeführt, wobei der in Richtung der Radsatzkühlung geführte Hydraulikfluidvolumenstrom über ein Radsatzkühlventil 61 in den Bereich des Radsatzes des Getriebes 2 geleitet wird, der der jeweils aktuell zugeschalteten Kupplung K1 oder K2 zugeordnet ist und das aktuell über das Getriebe 2 zu führende Drehmoment überträgt. Hierfür wird ein im Bereich von Kupplungsventilen 62, 63 jeweils eingestellter Betätigungsdruck für die Kupplungen K1 und K2 im Bereich von Steuerflächen des Radsatzkühlventiles 61 angelegt und das Radsatzkühlventil 61 in die jeweils gewünschte Schaltstellung überführt, um den aktuell in den Kraftfluss zugeschalteten Bereich des Radsatzes des Getriebes 2 im erforderlichen Umfang mit Kühl- und Schmieröl zu versorgen. Eine Druckseite 64 der zweiten Pumpeneinheit 44 ist vorliegend über eine Rückschlagventileinrichtung 65 mit dem Primärdruckkreis 46 bei Erreichen einer Ansprechgrenze der Rückschlagventileinrichtung 65 verbunden. Ein Druck p64 der Druckseite 64 der zweiten Pumpeneinheit 44 ist in Abhängigkeit eines über das Vorsteuerdruckregelventil 60 vorsteuerbaren Druckbegrenzungsventils 66 bzw. eines Stauventils variierbar.

Über die erste Pumpeneinheit 43 erfolgt eine bedarfsgerechte hydraulische Versorgung zugeordneter Aktoren. So werden beispielsweise die den beiden Kupplungen K1 und K2 zugeordneten Kupplungsventile 62 und 63 sowie ein Parksperrensystem 67 ausgehend vom Primärdruckkreis 46 bzw. der ersten Pumpeneinheit 43 mit Hydraulikfluid versorgt. Die zweite Pumpeneinheit 44 ist prinzipiell dem ersten Bereich 53 des Sekundärdruckkreises 54 zugeordnet, der einen eigenen Niederdruckkreis darstellt, und versorgt eine Schmierspinne der Radsatzkühlung sowie eine Allradkupplung 68, die eine sogenannte Hang-On-Kupplung darstellt.

Während üblicher Betriebsbedingungen, während welchen eine vorliegend als Brennkraftmaschine ausgeführte Antriebsmaschine eines mit dem Getriebe 2 ausgeführten Fahrzeugantriebsstranges zugeschaltet ist sowie eine Drehzahl der Getriebeeingangswelle größer Null ist und gleichzeitig eine Fahrgeschwindigkeit bzw. eine Antriebsgeschwindigkeit ebenfalls größer Null ist, werden der Radsatz des Getriebes 2 und auch die Allradkupplung 68 zumindest ausgehend von der zweiten Pumpeneinheit 44 über den ersten Bereich 53 mit Hydraulikfluid versorgt. Da die Belastung des Radsatzes des Getriebes 2 mit steigender Fahrzeuggeschwindigkeit üblicherweise zunimmt, erfolgt durch die zweite Pumpeneinheit 44, deren Pumpenantriebsdrehzahl bzw. deren Förderstrom proportional zur Fahrzeuggeschwindigkeit ist, automatisch in bestimmten Betriebspunkten zusätzlich eine bedarfsgerechte Kühlung und Schmierung des Radsatzes.

Bei stehendem Fahrzeug bzw. langsamen Fahrgeschwindigkeiten und gleichzeitig hohen Drehmomentbelastungen im Bereich des Radsatzes, beispielsweise während einer Rennstartsituation, während der eine Drehzahl der Antriebsmaschine nahezu maximal ist und ein Fahrer gleichzeitig die Betriebsbremse betätigt, ist der Radsatz des Getriebes 2 aufgrund der vorbeschriebenen Konfiguration der Betätigungsvorrichtung 1 zusätzlich von der ersten Pumpeneinheit 43 bzw. der Flügelzellenpumpe über das Systemdruckventil 47, das Bypassventil 52 und das Kühlventil 48 mit Hydraulikfluid versorgbar. Diese zusätzliche Versorgungsmöglichkeit des ersten Bereiches 53 ausgehend von der ersten Pumpeneinheit 43 ermöglicht prinzipiell eine kleinere Dimensionierung der zweiten Pumpeneinheit 44.

Ist die Antriebsmaschine des Fahrzeugantriebsstranges bei höheren Fahrgeschwindigkeiten beispielsweise während eines Segelbetriebs abgeschaltet und fördert die erste Pumpeneinheit 43 kein Hydraulikfluid, besteht die Möglichkeit, den Primärdruckkreis 46 über die Rückschlagventileinrichtung 65 ausgehend von der dann mit der Abtriebsdrehzahl bzw. mit einer hierzu äquivalenten Drehzahl angetriebenen zweiten Pumpeneinheit 44 mit Hydraulikfluid zu versorgen. Wird der Druck auf der Druckseite 64 der zweiten Pumpeneinheit 44 über das Druckbegrenzungsventil 66 angehoben, besteht die Möglichkeit, in bestimmten Betriebspunkten des Getriebes 2 bzw. des damit ausgeführten Fahrzeugantriebsstranges eine eingeschränkte Funktionalität des Getriebes 2, beispielsweise eine Gangnachführung, eine Kupplungskühlung oder dergleichen, über die zweite Pumpeneinheit 44 aufrecht zu erhalten.

Die zweite Pumpeneinheit 44 bezieht ihre Antriebsenergie während solcher Betriebszustandsverläufe des Fahrzeugantriebsstranges aus der Fahrzeugmasse und verursacht aufgrund der direkten Energiewandlung im Gegensatz zu einer elektrisch betriebenen Zusatzpumpe keine unerwünschte Belastung eines elektrischen Bordnetzes oder dergleichen und ist zudem mit einem günstigeren Wirkungsgrad betreibbar sowie durch ein niedrigeres Bauraum-Leistungsbedarf-Verhältnis gekennzeichnet. Weitere elektrische Verbraucher sind dann über einen längeren Zeitraum mit elektrischer Energie versorgbar als dies bei Fahrzeugen der Fall ist, die mit zusätzlichen elektrisch antreibbaren Pumpen ausgeführt sind. Insbesondere während eines Segelbetriebes mit im Bereich des Getriebes eingelegter Übersetzung bei gleichzeitig mit Betätigungsdruck beaufschlagten Kupplungen des Getriebes ist unter Umständen sogar eine Aufladung eines elektrischen Speichers möglich, wenn eine generatorisch betreibbare elektrische Maschine vorgesehen ist.

Solange die Fahrgeschwindigkeit eines mit dem Getriebe 2 ausgeführten Fahrzeuges größer Null ist, wird selbst bei abgeschalteter Antriebsmaschine ein Leerlaufen des Primärdruckkreises 46 verhindert, da der Primärdruckkreis 46 ausgehend von der zweiten Pumpeneinheit 44 oberhalb des für das Öffnen der Rückschlagventileinrichtung 65 erforderlichen positiven Druckgefälles zwischen der Druckseite 64 der zweiten Pumpeneinheit 44 und dem Primärdruckkreis 46 permanent von der zweiten Pumpeneinheit 44 mit Hydraulikfluid versorgt wird. Daraus folgt wiederum, dass bei einem Wiederstart der Antriebsmaschine die gewünschten Betriebsbedingungen, wie das Einlegen eines gewünschten Ganges und gleichzeitiges Bedrucken der Kupplungen des Getriebes 2 ohne größere Verzögerungen hergestellt werden können.

Beispielsweise während der Durchführung von Schaltungen im Getriebe 2 wird die Kühlung der beiden Kupplungen K1 und K2 ausgehend vom Primärdrucckreis 46 im Bereich des Kühlventils 48 abgeschaltet, um die jeweils angeforderte Schaltung innerhalb gewünscht kurzer Betriebszeiten verzögerungsfrei durchführen zu können. In einem derartigen Betriebszustand ist der Radsatz über die zweite Pumpeneinheit 44 mit Hydraulikfluid versorgbar.

Die beiden Pumpeneinheiten 43 und 44 weisen eine gemeinsame Saugleitung 69 mit einer gemeinsamen Filtereinrichtung 70 auf. Bei hinreichend großen Fahrgeschwindigkeiten wird die Saugaufladung der zweiten Pumpeneinheit 44 für die gemeinsame Saugleitung 69 verwendet, womit eine energetische Entlastung beider Pumpeneinheiten 43 und 44 möglich ist. Über die gemeinsame Saugleitung 69 saugen die beiden Pumpeneinheiten 43 und 44 Hydraulikfluid aus einem gemeinsamen Ölraum 71 an, der im Wesentlichen dem Niederdruckbereich 31 entspricht bzw. mit diesem verbunden ist.

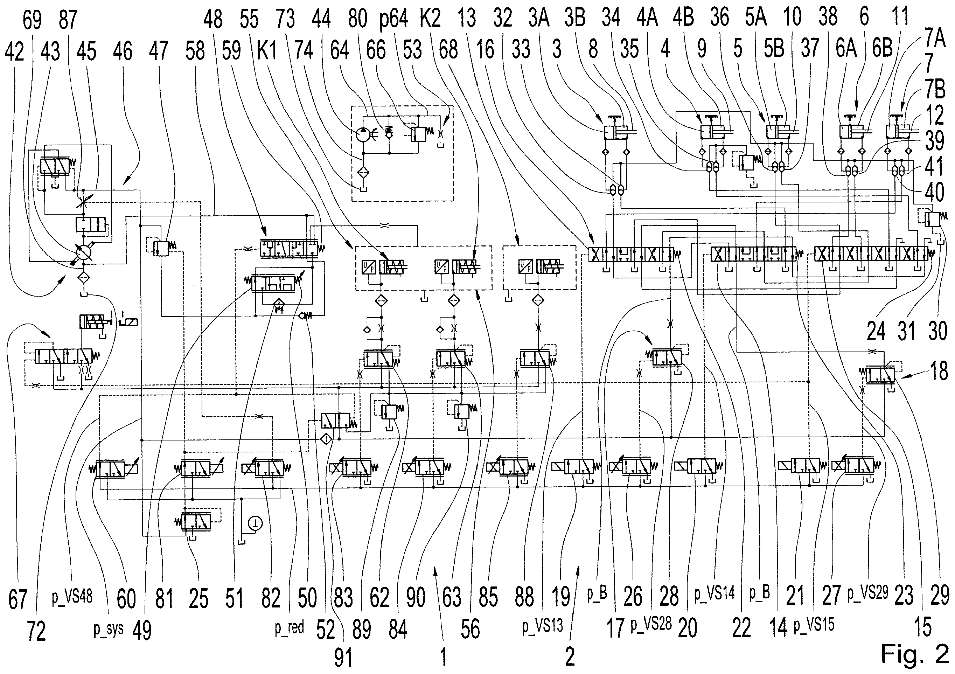

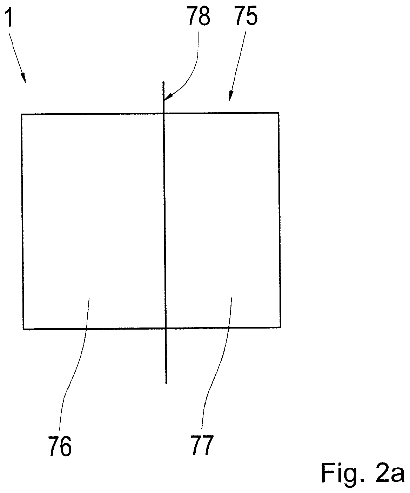

Die Betätigungsvorrichtung 1 ist in der in Fig. 2 näher gezeigten Art und Weise mit einem Gehäuse 75 ausgeführt, in dem die vorstehend näher beschriebenen Steuer- und Regelkomponenten anordenbar sowie diese miteinander verbindende hydraulische Leitungen vorgesehen sind. Das Gehäuse 75 ist mit den Pumpeneinheiten 43 und 44 bzw. den Hydraulikpumpen koppelbar und umfasst vorliegend zwei Gehäuseteile 76, 77, die im Bereich einer Schnittstelleneinrichtung 78 zum Austausch von Hydraulikfluid miteinander verbunden sind.

Dabei stellt das Gehäuseteil 76 eine Kanalplatte und das Gehäuseteil 77 eine Ventilplatte der Betätigungsvorrichtung 1 dar, zwischen welchen ein als Schnittstelleneinrichtung wirkendes Zwischenblech 78 eingefügt ist, mittels welchem die Übergabestellen zwischen der Ventilplatte 76 und der Kanalplatte 77 jeweils mit geringem Aufwand auf kostengünstige Art und Weise variierbar sind. Die Betätigungsvorrichtung 1 bzw. deren Gehäuse 75 stellt einen sogenannten Baukasten bzw. ein Modul dar, das für eine Vielzahl verschiedener Getriebederivate eines Doppelkupplungsgetriebes einsetzbar ist und dessen Gehäuseteile 76 und 77 mit den zum Versorgen der Getriebekomponenten des Getriebes 2 erforderlichen Steuer- und Regelkomponenten bestückbar sowie mit den dafür erforderlichen hydraulischen Leitungen ausgeführt sind. Die Anpassung der Betätigungsvorrichtung 1 an das jeweilige Getriebekonzept erfolgt über die zwischen den Gehäuseteilen 76 und 77 vorgesehene Schnittstelleneinrichtung 78.

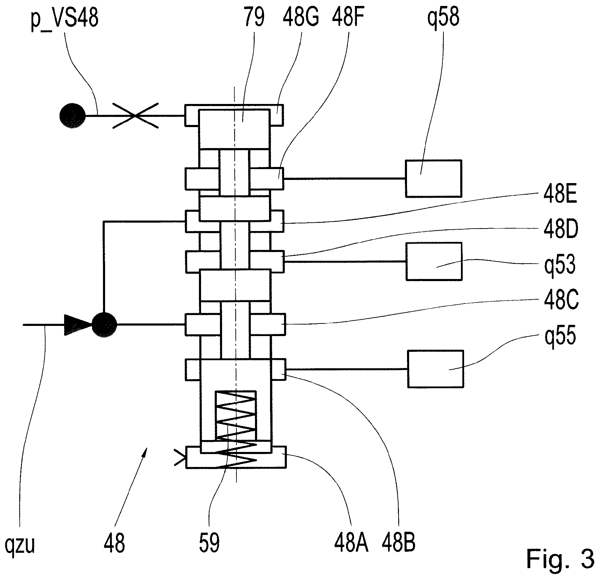

Fig. 3 bis Fig. 5 zeigen jeweils eine konstruktive Ausführung des Kühlventils 48 der Betätigungsvorrichtung 1 gemäß Fig. 1, über das die über das Systemdruckventil 47 in Richtung des Kühlventils 48 geführte Hydraulikfluidvolumenmenge qzu zwischen den drei Ausgangsleitungen des Kühlventils 48 nahezu beliebig verteilt werden kann. Das Kühlventil 48 stellt einen sogenannten Stromteiler dar, über den immer eine der drei Ausgangsleitungen nicht mit Hydraulikfluidvolumen versorgt wird. Da bei dem Stromteiler bzw. dem Kühlventil 48 dann immer nur der Quotient zwischen zwei Leitungswiderständen wirksam wird, unterbleibt - hinreichend große Kanalquerschnitte vorausgesetzt - eine zusätzliche Druckerhöhung durch die Verteilerschaltung. Um den über das Systemdruckventil 47 zur Verfügung stehenden Hydraulikfluidvolumenstrom qzu zwischen dem ersten Bereich 53 des Systemdruckkreises 54, dem zweiten Bereich 55 des Sekundärdruckkreises 54 und der Leitung 58, über die die Saugaufladung der beiden Pumpeneinheiten 43 und 44 erfolgt, in gewünschtem Umfang aufteilen zu können, wird die in Fig. 3 bis Fig. 5 gezeigte Ventilschaltung vorgeschlagen.

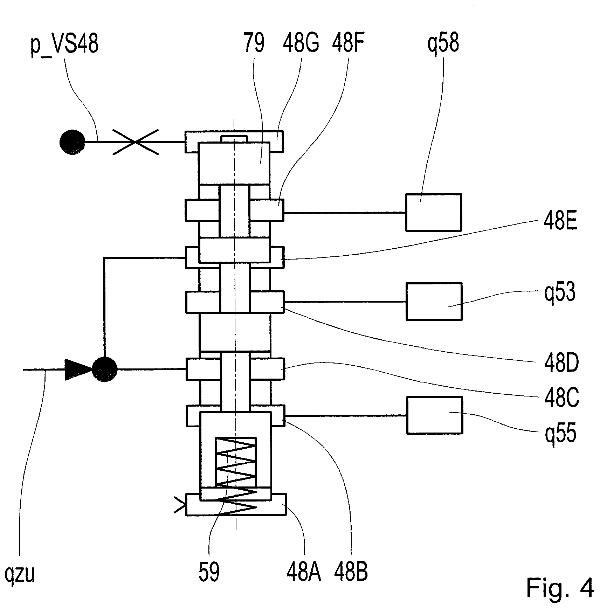

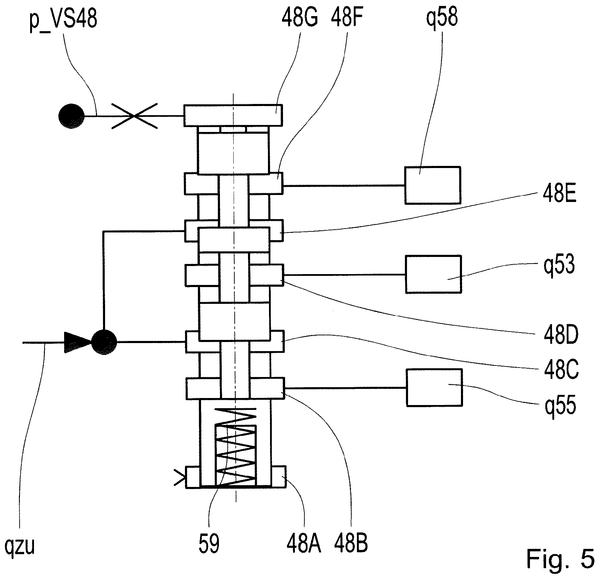

Das Kühlventil 48 ist vorliegend mit sieben Ventiltaschen 48A bis 48G ausgebildet, wobei durch kontinuierliche Bedruckung der Ventiltasche 48G ausgehend vom Vorsteuerdruckregelventil 60 mit dem Vorsteuerdruck p_VS48 sich ein Ventilschieber 79 des Kühlventils 48 kontinuierlich gegen die Federeinrichtung 59 verschiebt. Der im Bereich der Ventiltasche 48E zur Verfügung stehende Hydraulikfluidvolumenstrom qzu wird in der in Fig. 3 gezeigten Stellung des Ventilschiebers 49 vollständig in Richtung der Ventiltasche 48D und damit des ersten Bereiches 53 des Sekundärdruckkreises 54 weitergeleitet. Das bedeutet, dass weder die Saugaufladung über die Leitung 58 noch die Kühlung des Doppelkupplungssystems 56 über das Kühlventil 48 mit Hydraulikfluidvolumen versorgt werden. Fig. 4 zeigt eine Zwischenstellung des Ventilschiebers 79, während der Ventilschieber 79 in der Darstellung gemäß Fig. 5 vollständig in seine zweite Endstellung vom Vorsteuerdruck p_VS48 entgegen der Federkraft der Federeinrichtung 59 umgeschoben ist.

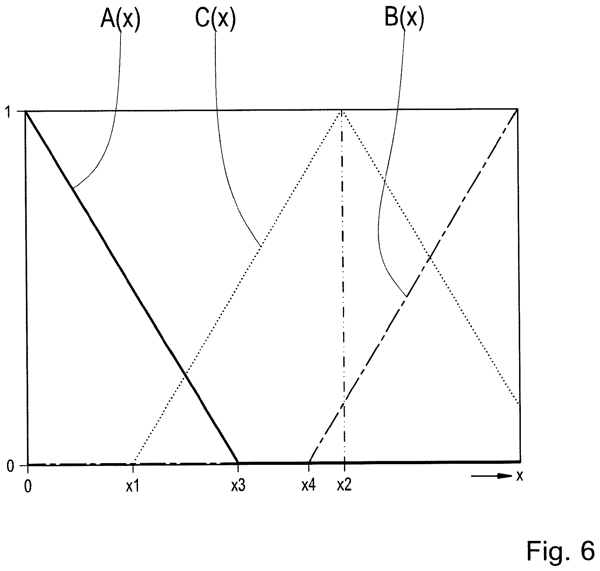

Fig. 6 zeigt eine Öffnungscharakteristik des Kühlventils 48, wobei die Funktion A(x) eine vom Ventilschieber 79 freigebbare Öffnungsfläche des Kühlventils 48 zwischen den Ventiltaschen 48E und 48D bezeichnet, während x dem Stellweg des Ventilschiebers 79 entspricht. Die weitere Funktion B(x) entspricht wiederum der vom Ventilschieber 79 freigebbaren Öffnungsfläche zwischen den Ventiltaschen 48E und 48F, während die Funktion C(x) die jeweils sich über dem Stellweg x des Ventilschiebers 79 einstellende Öffnungsfläche des Kühlventils 48 im Bereich zwischen den Ventiltaschen 48C und 48B wiedergibt.

In der in Fig. 3 dargestellten Ausgangslage des Kühlventils 48 bzw. des Ventilschiebers 79 ist im Bereich des Kühlventils 48 zunächst nur die Öffnungsfläche A(x) zwischen den Ventiltaschen 48E und 48D in Richtung der Radsatzkühlung bzw. des ersten Bereiches 53 geöffnet. Mit zunehmendem Stellweg x des Ventilschiebers 79 ausgehend von der in Fig. 3 dargestellten ersten Endstellung in Richtung der in Fig. 5 dargestellten zweiten Endstellung nimmt die Öffnungsfläche A(x) monoton ab. Ist der Ventilschieber 79 um den Stellwegwert x1 von der ersten Endstellung weg verschoben, öffnet sich erstmalig auch ein Durchgang im Bereich des Kühlventils 48 in Richtung der Kühlung des Doppelkupplungssystems 56, weshalb der Verlauf C(x) ansteigt. Die Öffnungscharakteristik von C(x) ist zunächst monoton steigend. Erst wenn der Ventilschieber 79 um den Stellwegwert x2 von der ersten Endstellung weg verschoben ist, ist die Öffnungscharakteristik von C(x) mit weiter zunehmendem Stellweg des Ventilschiebers 79 wiederum monoton fallend.

Bei der in Fig. 3 bis Fig. 5 gezeigten konstruktiven Ausführung des Kühlventils 48 ist der Zulauf im Bereich der Ventiltaschen 48E und 48C niemals gleichzeitig mit den Ventiltaschen 48F und 48D verbunden. Dieser Aspekt ist auch der Darstellung gemäß Fig. 6 entnehmbar, da die Öffnungsfläche A(x) bereits ab einem Stellwegwert x3 gleich 0 ist, zu dem auch die Öffnungsfläche B(x) noch vollständig vom Ventilschieber 79 verschlossen ist. Erst ab einem Stellwegwert x4 steigt die Öffnungsfläche B(x) monoton an, die vom Ventilschieber 79 vollständig freigegeben wird, wenn dieser seine in Fig. 5 gezeigte zweite Endstellung erreicht hat. In der zweiten Endstellung des Ventilschiebers 79 ist die Öffnungsfläche C(x) jedoch nicht vollständig vom Ventilschieber 79 gesperrt.

In der in Fig. 4 gezeigten Zwischenstellung des Ventilschiebers 79 wird der im Bereich der Ventiltaschen 48E und 48C anliegende Hydraulikfluidvolumenstrom qzu im Wesentlichen zu gleichen Teilen in Richtung des ersten Bereiches 53 und in Richtung der Kühlung des Doppelkupplungssystems 56 weitergeleitet. Durch die spezielle Gestaltung der innenliegenden Zulauftaschen bzw. der Ventiltaschen 48E und 48C kompensieren sich in diesem Arbeitspunkt die am Ventilschieber 79 angreifenden stationären Strömungskräfte nahezu vollständig.

Die Verteilung des im Bereich der Ventiltaschen 48E und 48C anliegenden Hydraulikfluidvolumenstromes qzu in Richtung des ersten Bereiches 53, in Richtung der Kühlung des Doppelkupplungssystems 56 und der Leitung 58 bzw. der Saugaufladung ist durch die nachfolgenden Gleichungen mathematisch darstellbar:

$$q53 = \frac{A(x)}{A(x) + B(x) + C(x)} qzu$$

$$q58 = \frac{B(x)}{A(x) + B(x) + C(x)} qzu$$

$$q55 = \frac{C(x)}{A(x) + B(x) + C(x)} qzu$$

Dabei entspricht die Funktion q53 dem in Richtung des ersten Bereiches 53 über das Kühlventil 48 jeweils führbaren Hydraulikfluidvolumenstrom in Abhängigkeit des dem Kühlventil 48 über das Systemdruckventil 47 zugeführten Hydraulikfluidvolumenstroms qzu. Die Funktion q58 ist der der Saugaufladung 58 zugeführte Hydraulikfluidvolumenstrom während die Funktion q55 dem Hydraulikfluidvolumenstrom entspricht, der der Kühlung des Doppelkupplungssystems 56 in Abhängigkeit des jeweils aktuell vorliegenden Stellwegs x des Ventilschiebers 79 des Kühlventils 48 vorliegt.

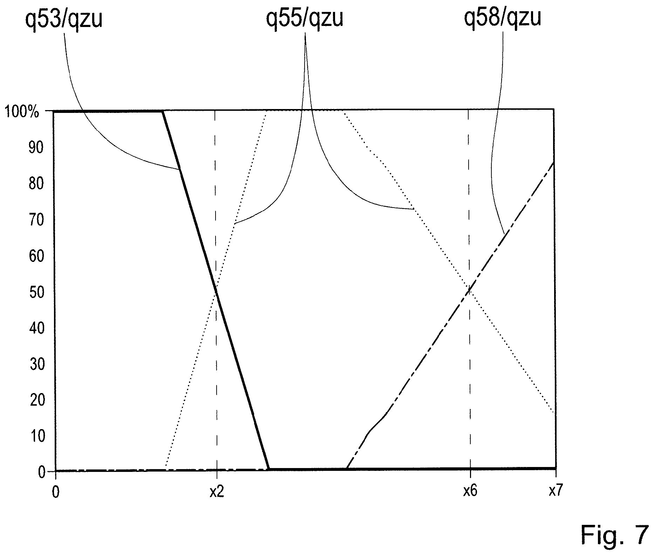

In Fig. 7 sind jeweils die normierten Verläufe q53/qzu, q55/qzu und q58/qzu über dem Stellweg x des Ventilschiebers 79 des Kühlventils 48 gezeigt. Aus der Darstellung gemäß Fig. 7 geht beispielsweise hervor, dass bei Erreichen der zweiten Endstellung des Ventilschiebers 79, d. h. bei Vorliegen eines Stellwegwertes x7, eine Aufteilung des dem Kühlventil 48 zugeführten Hydraulikfluidvolumenstromes qzu in Richtung der Saugaufladung 58 und der Kühlung des Doppelkupplungssystems 56 in einem definierten Verhältnis, vorliegend ca. 85 % in Richtung der Saugaufladung und etwa 15 % in Richtung der Kühlung des Doppelkupplungssystems 56, erfolgt. Bei Vorliegen eines Stellwegwertes x6 wird der Durchfluss in Richtung der Saugaufladung 58 im Bereich der Ventiltasche 48D gedrosselt und gleichzeitig Hydraulikfluidvolumen in Richtung der Kühlung des Doppelkupplungssystems 56 geführt. In dieser Stellung des Ventilschiebers 79 erfolgt im Gegensatz zu einer einem Stellweg x2 entsprechenden Stellung des Ventilschiebers 79 keine automatische Kompensation der am Ventilschieber 79 angreifenden Strömungskräfte.

Grundsätzlich beschreibt die Summe aller drei Öffnungsflächen A(x), B(x) und C(x) den hydraulischen Ersatzwiderstand des Kühlventils 48. Bei geeignet groß gestalteten Ventiltaschen bzw. einem entsprechend dimensionierten Ventildurchmesser ist der Ersatzwiderstand des Kühlventils 48 beliebig reduzierbar. Unabhängig davon weist der Ventilschieber 79 des Kühlventils 48 im Bereich der Durchflusstaschen 48B bis 48E jeweils den identischen Durchmesser auf.

Die in Fig. 1 dargestellte Ausführungsform der hydraulischen Betätigungsvorrichtung 1 ist zur Versorgung der Komponenten des Getriebes 2 bzw. des Doppelkupplungsgetriebes geeignet, da das Getriebe 2 von den beiden voneinander unabhängigen Pumpeneinheiten 43 und 44 mit Hydraulikfluid versorgbar ist. Die erste Pumpeneinheit 43, die eine geregelte Flügelzellenpumpe ist, ist an die Motordrehzahl gekoppelt, während die zweite Pumpeneinheit 44, die eine Konstantpumpe ist, an die Abtriebswelle des Getriebes 2 gekoppelt ist. Diese konstruktive Ausführung ermöglicht prinzipiell vier unterschiedliche Betriebsarten.

Während einer ersten Betriebsart, zu der eine mit der Getriebeeingangswelle koppelbare Antriebsmaschine in Betrieb ist, fördert die erste Pumpeneinheit 43 Hydraulikfluidvolumen, während die zweite Pumpeneinheit 44 bei gleichzeitig stehendem Fahrzeug kein Fördervolumen zur Verfügung stellt. Während einer zweiten Betriebsart, während der die Antriebsmaschine im Fahrzeugstillstand abgeschaltet ist, wird weder von der ersten Pumpeneinheit 43 noch von der zweiten Pumpeneinheit 44 Hydraulikfluidvolumen zur Verfügung gestellt. Die zweite Betriebsart entspricht beispielsweise einem Parkmodus oder einem Stopp vor einer Verkehrsampel. Eine dritte Betriebsart eines Fahrzeuges ist dadurch gekennzeichnet, dass das Fahrzeug mit einer Fahrzeuggeschwindigkeit größer Null bewegt wird und die Antriebsmaschine zugeschaltet ist, sodass sowohl von der ersten Pumpeneinheit 43 als auch von der zweiten Pumpeneinheit 44 Hydraulikfluidvolumen gefördert wird. Im Unterschied hierzu wird während einer vierten Betriebsart, die auch als Segelbetrieb bezeichnet wird und während der die Antriebsmaschine bei einer Fahrzeuggeschwindigkeit größer Null abgeschaltet ist, lediglich von der zweiten Pumpeneinheit 44 Hydraulikfluidvolumen zur Verfügung gestellt.

Über das in Fig. 1 dargestellte Schaltschema wird für eine Versorgung von Schmierölleitungen für den Radsatz und zur Kühlung der Allradkupplung 68 die zweite Pumpeneinheit 44 genutzt, wenn ein Fahrzeug in der ersten oder in der dritten Betriebsart betrieben wird. Dabei werden die hydraulischen Widerstände der zugehörigen Anschlussleitungen auf ein konstruktiv mögliches Minimum reduziert, womit auch die hydraulische Leistungsaufnahme der zweiten Pumpeneinheit 44 gering ist.

Im Segelbetrieb wird im Bereich der ersten Pumpeneinheit 43 keine hydraulische Leistung verbraucht. Zusätzlich ist auch die üblicherweise als Brennkraftmaschine ausgeführte Antriebsmaschine leistungsfrei. Durch elektrische Ansteuerung des Vorsteuerdruckregelventils 60 ist ein hydraulischer Zusatzwiderstand aktivierbar, der das Förderdruckniveau der zweiten Pumpeneinheit 44 deutlich anhebt. Über diese Maßnahme ist die zweite Pumpeneinheit 44 im Segelbetrieb auch zur Betätigung des Getriebes 2, etwa zur Gangnachführung, einsetzbar.

Im ersten Betriebsmodus, zu dem die Antriebsmaschine zugeschaltet ist und sich das Fahrzeug im Wesentlichen im Stillstand befindet, wird zunächst von der ersten Pumpeneinheit 43 gefördertes überschüssiges Hydraulikfluidvolumen in Richtung des ersten Bereiches 53 bzw. der Radsatzkühlung geführt, wobei das Kühlventil 48 sich hierfür in der in Fig. 1 gezeigten Ausgangsstellung befindet. Dies bietet den Vorteil, dass beispielsweise bei einem Kaltstart des Fahrzeuges das Doppelkupplungssystem 56 zunächst nicht mit Kühlöl beaufschlagt wird und kein zusätzliches Schleppmoment, welches sich beispielsweise beim Einlegen der Gänge im Getriebe 2 negativ auswirkt, aufbauen kann.

Im dritten Betriebsmodus wird das Kühlventil 48 im Regelfall in seine dritte Schaltstellung überführt, in der das Doppelkupplungssystem 56 über die erste Pumpeneinheit 43 mit Kühlöl beaufschlagt wird, während die Radsatzkühlung des ersten Bereiches 53 des Sekundärdruckkreises 54 ausgehend von der zweiten Pumpeneinheit 44 mit Hydraulikfluidvolumen versorgt wird. Das Stauventil 66 wird vollständig geöffnet, da es wie das Kühlventil 48 ausgehend von dem Vorsteuerdruckregelventil 60 mit dem Vorsteuerdruck p_VS48 beaufschlagt wird. Diese Maßnahme führt vorteilhafterweise dazu, dass die zweite Pumpeneinheit 44 bzw. die Radsatzpumpe nur gegen sehr geringe hydraulische Widerstände fördern muss. Die Rückschlagventileinrichtung 65 bzw. das Brückenventil ist während letztbeschriebenem Betriebszustand der hydraulischen Betätigungsvorrichtung 1 geschlossen, da der im Bereich der ersten Pumpeneinheit 43 erzeugte Systemdruck p_sys größer als der Druck stromauf des Stauventils 66 ist. Eine weitere Rückschlagventileinrichtung 80, die auch als Radsatzpumpenventil bezeichnet wird, arbeitet als Sicherheitsventil, wenn das Fahrzeug rückwärts anfährt, da die zweite Pumpeneinheit 44 hierbei ihre Durchflussrichtung aufgrund des entgegengesetzten Antriebes ändert bzw. wechselt.

Während Sonderbetriebszuständen des mit dem Getriebe 2 ausgeführten Fahrzeugantriebsstranges, während welchen im Bereich des Radsatzes des Getriebes 2 zusätzliche Kühlölmengen benötigt werden, weil beispielsweise der proportional zur Fahrzeuggeschwindigkeit geförderte Volumenstrom im Bereich der zweiten Pumpeneinheit 44 für eine erforderliche Kühlung und Schmierung des Radsatzes nicht ausreichend ist, wird das Kühlventil 48 in seine zweite Schaltstellung überführt, in der das Systemdruckventil 47 über das Kühlventil 48 sowohl mit dem ersten Bereich 53 als auch mit dem zweiten Bereich 55 des Sekundärdruckkreises 54 in Verbindung steht.

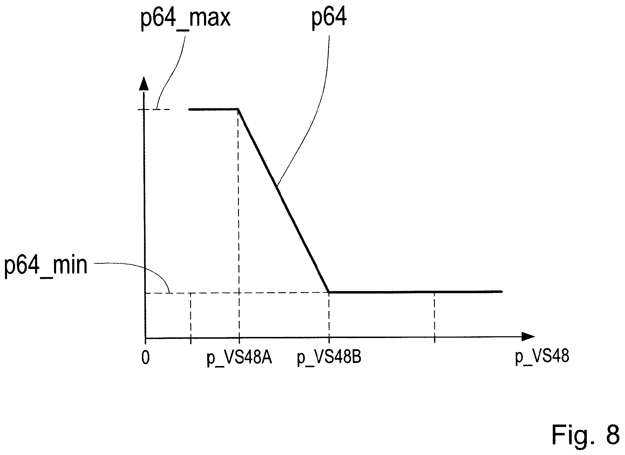

Im vierten Betriebsmodus des mit dem Getriebe 2 ausgeführten Fahrzeugantriebsstranges befindet sich das Kühlventil 48 in seiner ersten Schaltstellung, in der der Ventilschieber 79 vollständig von der Federeinrichtung 59 in die in Fig. 1 gezeigte erste Endstellung umgeschoben ist. Das Stauventil 66 arbeitet dann ohne anliegenden Vorsteuerdruck p_VS48 und stellt im Bereich der Druckseite 64 der zweiten Pumpeneinheit 44 ein definiertes Druckniveau ein, das weitgehend unabhängig vom Förderstrom der zweiten Pumpeneinheit 44 ist. Über das Brückenventil 80 wird auch der Systemdruckkanal der ersten Pumpeneinheit 43 und insbesondere auch das an die elektromagnetischen Drucksteller bzw. die Vorsteuerdruckregelventile 26, 27, 60 und 81 bis 85 sowie die Magnetventile 19 bis 21 angeschlossene Druckreduzierventil 25 mit Hydraulikfluidvolumen ausgehend von der zweiten Pumpeneinheit 44 versorgt. Damit sind beispielsweise die Kolben-Zylinder-Einrichtungen 3 bis 7 sowie das Doppelkupplungssystem 56 von der zweiten Pumpeneinheit 44 mit Hydraulikfluid beaufschlagbar und betätigbar, was durch die in Fig. 8 dargestellte fallende Ansteuercharakteristik des Stauventils 66 möglich ist.

Fig. 8 zeigt eine stationäre Kennlinie des Stauventils 66 über dem Vorsteuerdruck p_VS48, der im Bereich des Vorsteuerdruckregelventils 60 einstellbar ist. Aus der Darstellung gemäß Fig. 8 geht hervor, dass ein Druck p64 stromauf des Stauventils 66 bis zu einem Vorsteuerdruck p_VS48A seinen maximalen Wert p64_max aufweist. Mit steigenden Vorsteuerdruckwerten p_VS48 sinkt der Druck p64 bis zu einem zweiten Vorsteuerdruckwert p_VS48B zunehmend ab und weist ab dem Vorsteuerdruckwert p_VS48B sein Minimum p64_min auf.

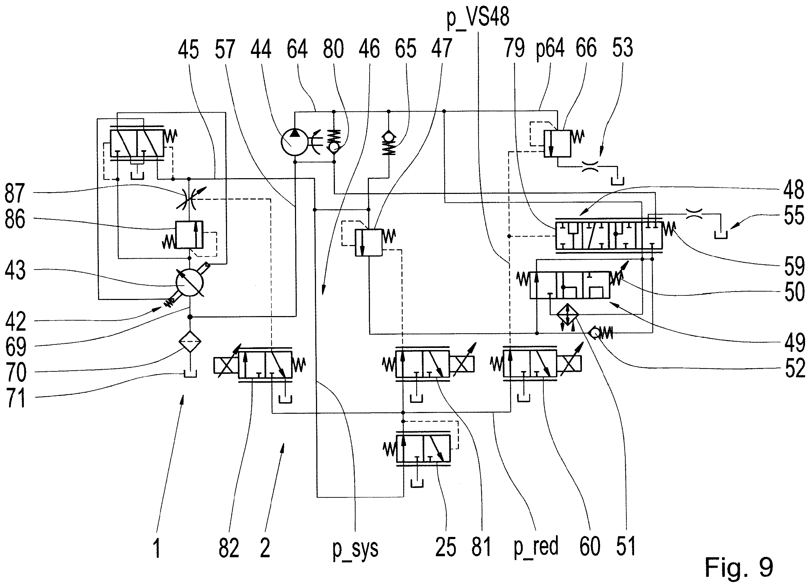

Alternativ zu der Darstellung gemäß Fig. 1 kann es wie in Fig. 9 dargestellt auch vorgesehen sein, dass das Kühlventil 48 über das Stauventil 66 mit dem ersten Bereich 53 des Sekundärdruckkreises 54 in Wirkverbindung steht bzw. in Wirkverbindung bringbar ist. Dies führt vorteilhafterweise dazu, dass während eines Starts der Antriebsmaschine der Systemdruck p_sys sich im Bereich des Primärdruckkreises 46 unter Umständen etwas schneller aufbaut. Das Stauventil 66 befindet sich dann in seiner Ausgangsstellung. Bei einem Vorsteuerdruck p_VS48 von im Wesentlichen gleich Null und ohne Durchfluss im Bereich des dann in geschlossenem Betriebszustand vorliegenden Stauventils 60 wird ein über das Kühlventil 48 stromauf des Stauventils 66 zur Verfügung stehender Hydraulikfluidvolumenstrom bei einem Druck stromauf des Brückenventils 65 größer als oder gleich dessen Ansprechgrenze in den Primärdruckkreis 46 eingeleitet.

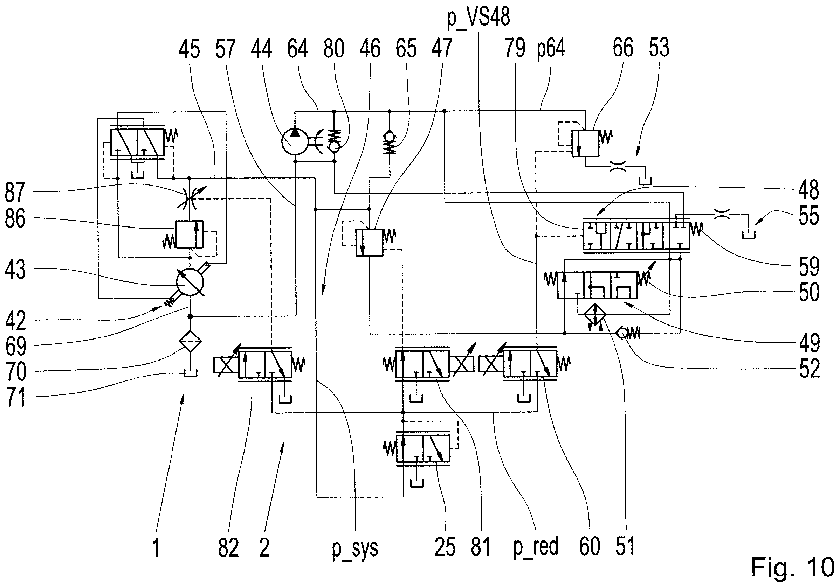

Fig. 10 zeigt eine Weiterbildung der Ausführungsform der hydraulischen Betätigungsvorrichtung 1 gemäß Fig. 1, bei der das Vorsteuerdruckregelventil 60 ein Druckregler mit steigender Strom-Druck-Kennlinie ist. Dies bietet den Vorteil, dass bei einem elektrischen oder mechanischen Ausfall des Vorsteuerdruckregelventils 60 die Kühlung des Doppelkupplungssystems 56 nicht aktiviert wird, was bei der Ausführung der Betätigungsvorrichtung 1 gemäß Fig. 1 der Fall ist. Zusätzlich wird beim elektrischen oder mechanischen Ausfall des Vorsteuerdruckregelventils 60 neben der Kühlung des Doppelkupplungssystems 56 auch die Saugaufladung aktiviert. Der Einsatz eines Druckreglers mit steigender Strom-Druck-Kennlinie ermöglicht in Abhängigkeit des jeweils vorliegenden Anwendungsfalles unter Umständen ein schnelleres Herstellen der Fahrzeugverfügbarkeit.

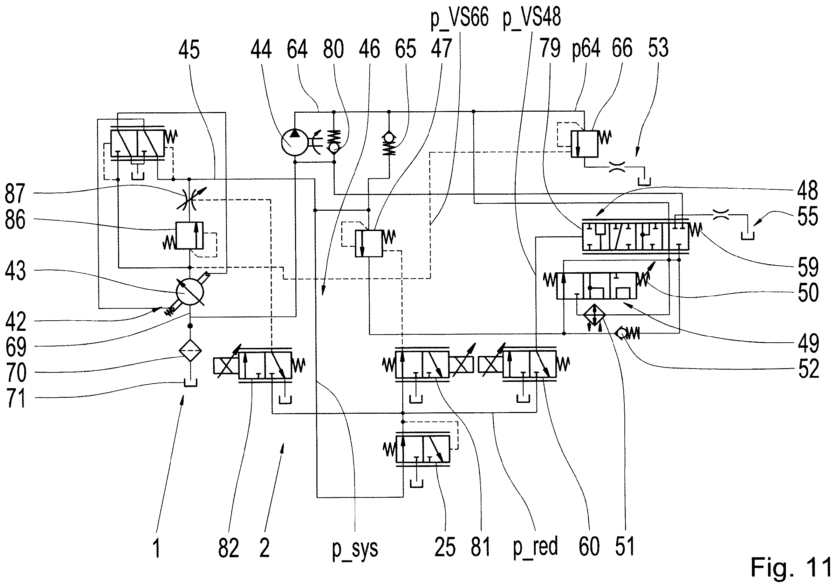

Bei einer in Fig. 11 gezeigten weiteren Ausführungsform der hydraulischen Betätigungsvorrichtung 1 gemäß Fig. 1 wird das Stauventil 66 mit einem anderweitig zur Verfügung stehenden Drucksignal vorgesteuert, wobei der im Bereich des Stauventils 66 anlegbare Vorsteuerdruck p_VS66 dem Druck entspricht, der zwischen der ersten Pumpeneinheit 43 und einem sogenannten Trennventil 86 vorliegt, das als Druckbegrenzungsventil ausgeführt ist.

Diese Ausführung der Betätigungsvorrichtung 1 bietet den Vorteil, dass das Stauventil 66 ohne weitere Zusatzmaßnahme, beispielsweise über eine interne Leitung des Steuergerätes, immer dann sein maximales Druckniveau einstellt, wenn der Förderdruck der ersten Pumpeneinheit 43 abfällt. Insbesondere bei niedrigen Betriebstemperaturen des Getriebes 2 und somit auch des im Bereich der hydraulischen Betätigungsvorrichtung 1 verwendeten Hydraulikfluides verursacht die Kühlung des Radsatzes des Getriebes 2 über den ersten Bereich 53 des Sekundärdruckkreises 54 nicht zu vernachlässigende Schleppmomente.

Aus diesem Grund wird über die nachfolgend näher beschriebene Vorgehensweise versucht, den geförderten Hydraulikfluidvolumenstrom der Pumpeneinrichtung 42, d. h. der ersten Pumpeneinheit 43 und der zweiten Pumpeneinheit 44, gesteuert so einzustellen, dass der erforderliche Kühlölvolumenstrom für den Radsatz dem von der ersten Pumpeneinheit 43 und der zweiten Pumpeneinheit 44 zur Verfügung gestellten Hydraulikfluidvolumenstrom entspricht. Der jeweils zur Verfügung stehende Kühlölvolumenstrom für das Doppelkupplungssystem 56 und den Radsatz wird im vorbeschriebenen Umfang über die motorseitig angetriebene, verstellbare Flügelzellenpumpe 43 und die abtriebsseitig angetriebene Radsatzpumpe 44 gefördert.

Die Fördermenge der Radsatzpumpe 44 ist in vorbeschriebenem Umfang fahrgeschwindigkeitsabhängig, während die Fördermenge der Flügelzellenpumpe 53 über eine elektromagnetisch ansteuerbare Vorsteuerstufe bzw. das Vorsteuerdruckregelventil 82 regelbar ist. Des Weiteren ist der gesamte zur Verfügung stehende Hydraulikfluidvolumenstrom der beiden Pumpeneinheiten 43 und 44 über eine entsprechende Ansteuerung des Kühlventils 48 durch das Vorsteuerdruckregelventil 60 aufteilbar. Durch die Aufteilung des zur Verfügung stehenden Fördervolumens der Pumpeneinheiten 43 und 44 soll erreicht werden, dass der erforderliche Kühlölvolumenstrom des Getriebes 2 im Bereich des Doppelkupplungssystems 56 und des Radsatzes gleich dem Fördervolumen der beiden Pumpeneinheiten 43 und 44 ist.

Sowohl der für die Kühlung des Doppelkupplungssystems 56 als auch für die Kühlung des Radsatzes jeweils zur Verfügung stehende Hydraulikfluidvolumenstrom wird in Abhängigkeit von der Ansteuerung des Kühlventils 48 und eines stromab der ersten Pumpeneinheit 43 vorgesehenen Blendenventils 87 mit verschiedenen Teilungsgraden von den beiden Pumpeneinheiten 43 und 44 geliefert bzw. gefördert. Hierfür werden das Kühlventil 48 von dem Vorsteuerdruckregelventil 60 und das Blendenventil 87 von dem Vorsteuerdruckregelventil 82 entsprechend mit Vorsteuerdruck beaufschlagt.

Befindet sich das Kühlventil 48 in einer sogenannten Mittellage, wird der Kühlölvolumenstrom der ersten Pumpeneinheit 43 exklusiv zur Kühlung des Doppelkupplungssystems 56 verwendet, während der von der zweiten Pumpeneinheit 44 geförderte Hydraulikfluidvolumenstrom zur Schmierung und Kühlung des Radsatzes des Getriebes 2 dem ersten Bereich 53 des Sekundärdruckkreises 54 zugeführt wird. Das Kühlventil 48 wird bei hohen Lasten im Bereich des Doppelkupplungssystems 56 bei gleichzeitig geringen Belastungen des Radsatzes in die Mittellage überführt. Befindet sich der Ventilschieber 79 des Kühlventils 48 in seiner ersten Endstellung, ist der über das Kühlventil 48 in Richtung des Doppelkupplungssystems 56 geführte Kühlölvolumenstrom im Wesentlichen gleich Null. Dann wird das Fördervolumen der Flügelzellenpumpe 43 und der Radsatzpumpe 44 im Wesentlichen vollständig zur Kühlung des Radsatzes bzw. zur Schmierung des Radsatzes des Getriebes 2 verwendet.

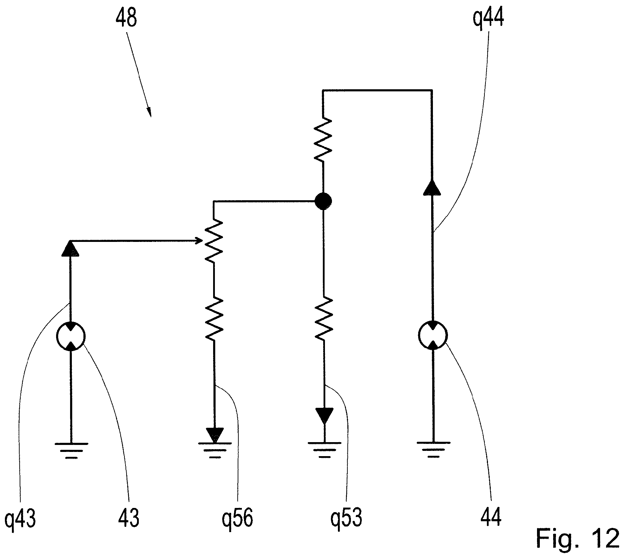

Das Kühlventil 48 stellt einen sogenannten Stromteiler dar, der von zwei Druckquellen versorgt wird. Fig. 12 zeigt ein Ersatzschaltbild des Kühlventils 48, das von den beiden Pumpeneinheiten 43 und 44 mit jeweils einem Hydraulikfluidvolumenstrom q43 bzw. q44 beaufschlagt wird. Der Zufluss des Kühlventils 48 wird in Richtung des ersten Bereichs 53 als abfließender Hydraulikfluidvolumenstrom 53 und in Richtung des Doppelkupplungssystems 56 in Form des abfließenden Hydraulikfluidvolumenstroms q56 zur Verfügung gestellt. Die beiden dem Kühlventil 48 zufließenden Hydraulikfluidvolumenströme q43 und q44 werden in Abhängigkeit der Stellung des Ventilschiebers 79 des Kühlventils 48 mit unterschiedlichen Verteilungsgraden in Richtung des Doppelkupplungssystems 56 und des Radsatzes über den ersten Bereich 53 weitergeleitet. Der jeweils erforderliche Kühlölvolumenstrom q56 und q53 für das Doppelkupplungssystem 56 und den Radsatz des Getriebes 2 wird mittels eines thermischen Modells bestimmt. Zusätzlich wird das Fördervolumen der Radsatzpumpe 44 ständig temperatur- und fahrgeschwindigkeitsabhängig berechnet.

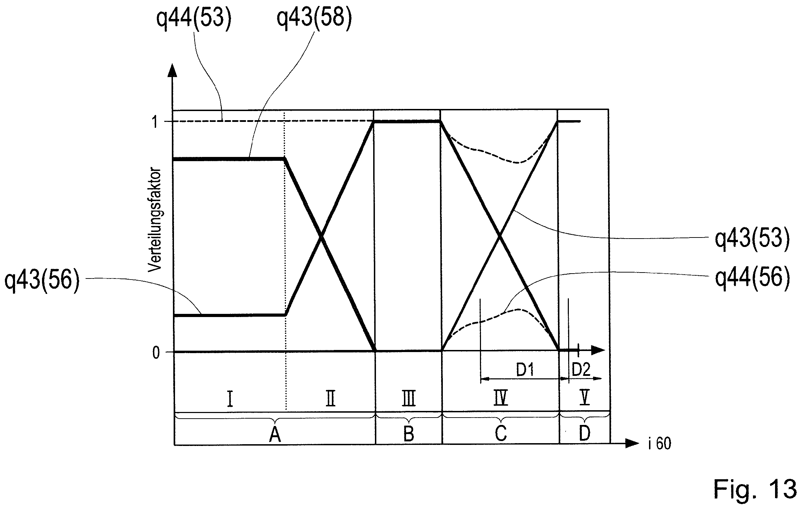

Zunächst wird im Fahrbetrieb zyklisch der optimalste Ansteuerbereich des Kühlventils 48 ermittelt. Dabei sind die nachfolgend näher erläuterten und in Fig. 13 über einem Betätigungsstrom i60 des Vorsteuerdruckregelventils 60 dargestellten Ansteuerbereiche A bis D2 relevant. Der Ansteuerbereich A, der sich zwischen einem Bereich des Betätigungsstromes i60 gleich Null und einem ersten Betätigungsstromwert i60A erstreckt, ist zusätzlich in zwei vorliegend als Unteransteuerbereiche bezeichnete weitere Betriebsbereiche untergliedert. Der erste Unteransteuerbereich des Ansteuerbereiches A erstreckt sich bis zu einem Betätigungsstromwert i60A1, der kleiner als der Betätigungsstromwert i60A ist. Bis zum kleineren Betätigungsstromwert i60A1 wird der von der ersten Pumpeneinheit 43 zur Verfügung gestellte Hydraulikfluidvolumenstrom q43 über das Kühlventil 48 größtenteils zur Saugaufladung q43(58) der beiden Pumpeneinheiten 43 und 44 über die Leitung 58 abgeführt. Der kleinere Teil q43(56) wird für die Kühlung des Doppelkupplungssystems 46 über das Kühlventil 48 in Richtung des zweiten Bereiches 55 weitergeleitet.

Mit steigenden Betätigungsstromwerten i60 nimmt das für die Saugaufladung vorgesehene Hydraulikfluidvolumen q43(58) stetig ab, während der zur Kühlung des Doppelkupplungssystems 56 vorgesehene Hydraulikfluidvolumenanteil q43(56) im zweiten Unteransteuerbereich des Ansteuerbereiches A stetig zunimmt. Wird das Vorsteuerdruckregelventil 60 mit dem Betätigungsstromwert i60A bestromt, wird das gesamte von der ersten Pumpeneinheit 43 zur Verfügung stehende Hydraulikfluidvolumen q43 im Bereich des Kühlventils 48 für die Kühlung des Doppelkupplungssystems 56 in Richtung des zweiten Bereiches 55 des Sekundärdruckkreises 54 geleitet. Während des sich an den ersten Ansteuerbereich A anschließenden zweiten Ansteuerbereichs B wird das von der Flügelzellenpumpe 43 zur Verfügung gestellte Hydraulikfluidvolumen q43 exklusiv für die Kühlung des Doppelkupplungssystems 56 verwendet, während der Radsatz des Getriebes 2 sowohl innerhalb des ersten Ansteuerbereiches A als auch innerhalb des Ansteuerbereiches B ausschließlich von der Radsatzpumpe 44 mit Hydraulikfluidvolumen q44(53) zum Kühlen und Schmieren beaufschlagt wird.

Mit weiter steigendem Betätigungsstrom i60 wird auch der Ventilschieber 79 des Kühlventils 48 zunehmend verstellt und das Kühlventil 48 wird innerhalb des dritten Ansteuerbereiches C betätigt, der sich wiederum direkt an den zweiten Ansteuerbereich B anschließt. Innerhalb des dritten Ansteuerbereiches C des Kühlventils 48 sinkt das von der Flügelzellenpumpe 43 in Richtung des Doppelkupplungssystems 56 geführte Hydraulikfluidvolumen q43(56) stetig ab, während das von der Flügelzellenpumpe 43 geförderte Hydraulikfluidvolumen q43 zunehmend für die Kühlung des Radsatzes über den Bereich 53 des Sekundärdruckkreises 54 verwendet wird. Der wiederum von der Radsatzpumpe 44 zur Verfügung stehende Hydraulikfluidvolumenstrom q44 wird zunächst mit steigendem Betätigungsstrom i60 gemäß dem Verlauf q44(53) zunehmend in geringerem Umfang in Richtung des Radsatzes und gemäß dem Verlauf q44(56) in steigendem Umfang in Richtung des Doppelkupplungssystems 56 geführt. Mit weiter steigendem Betätigungsstrom i60 sinkt der in Richtung des Doppelkupplungssystems 56 geführte Anteil q44(56) des von der Radsatzpumpe 44 geförderten Hydraulikfluidvolumenstromes q44 wieder in Richtung Null ab, während der in Richtung des Radsatzes des Getriebes 2 geführte Anteil q44(53) wieder ansteigt, bis der gesamte von der Radsatzpumpe 44 geförderte Hydraulikfluidvolumenstrom q44 in Richtung des Radsatzes geführt wird. An den dritten Ansteuerbereich C schließt sich wiederum der vierte Ansteuerbereich D an, innerhalb dem der von der Flügelzellenpumpe 43 und der Radsatzpumpe 44 geförderte Hydraulikfluidvolumenstrom vollständig für die Kühlung des Radsatzes über den ersten Bereich 53 des Sekundärdruckkreises 54 geführt wird. Innerhalb des vierten Ansteuerbereiches D erfolgt keine Kühlung des Doppelkupplungssystems 56.

Zusätzlich kann es vorgesehen sein, dass in einem Ansteuerbereich D1 eine pulsweitenmodulierte Ansteuerung im Bereich zwischen Betätigungsstromwerten i60B und i60C durchgeführt wird. Innerhalb eines sich an den Ansteuerbereich D1 anschließenden Ansteuerbereiches D2 erfolgt ein Schalten des Stauventiles 66.

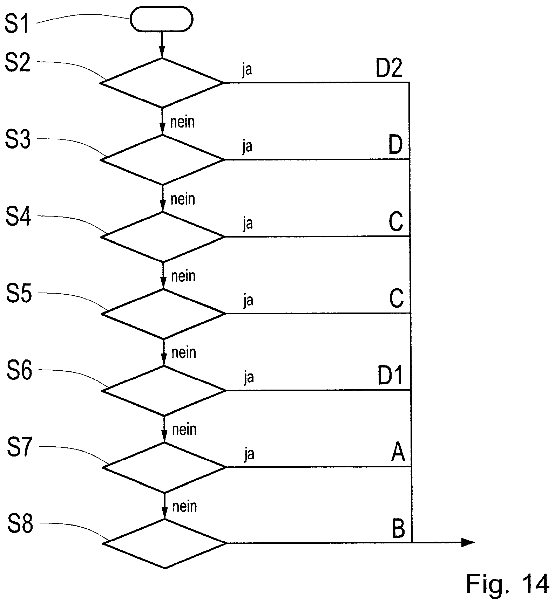

Um den jeweils betriebszustandsabhängig optimalen Ansteuerbereich A bis D2 des Kühlventils 48 ermitteln zu können, wird die in Fig. 14 dargestellte Vorgehensweise durchgeführt, die in einem ersten Schritt S1 aktiviert wird. Während eines ersten Abfrageschrittes S2 wird überprüft, ob beispielsweise eine Drehzahl der Antriebsmaschine kleiner als 400 U/min ist. Bei positivem Abfrageergebnis wird das Vorsteuerdruckregelventil 60 mit einem Vorsteuerdruckwert größer i60C bestromt und das Kühlventil 48 innerhalb des Ansteuerbereiches D2 betrieben. Bei negativem Abfrageergebnis des ersten Abfrageschrittes S2 wird zu einem zweiten Abfrageschritt S3 verzweigt, während dem überprüft wird, ob eine Kühlung des Doppelkupplungssystems 56 angefordert ist. Liegt keine entsprechende Anforderung vor, wird vom Abfrageschritt S3 zu einem dritten Abfrageschritt S4 verzweigt. Liegt jedoch eine entsprechende Anforderung für eine Kühlung des Doppelkupplungssystems 56 vor, wird das Kühlventil 48 innerhalb des Ansteuerbereiches D betrieben.

Während des dritten Abfrageschrittes S4 wird bei einer Anforderung zum Beaufschlagen des Radsatzes des Getriebes 2 mit einem Hydraulikfluidvolumenstrom, der größer ist als der aktuell von der Radsatzpumpe 44 zur Verfügung stehende Hydraulikfluidvolumenstrom, überprüft, ob die Flügelzellenpumpe 43 aktuell ein größeres Hydraulikfluidvolumen fördert als zur Kühlung des Doppelkupplungssystems 56 benötigt wird. Bei positivem Abfrageergebnis wird das Kühlventil 48 innerhalb des dritten Ansteuerbereiches C betrieben, während bei negativem Abfrageergebnis des dritten Abfrageschrittes S4 zu einem vierten Abfrageschritt S5 verzweigt wird, während dem überprüft wird, ob das Doppelkupplungssystem 56 ausgehend von der Radsatzpumpe 44 mit Hydraulikfluidvolumen beaufschlagbar ist. Dabei wird während des vierten Abfrageschrittes S5 überprüft, ob ein Kühlölbedarf im Bereich des Doppelkupplungssystems 56 vorliegt, den die Radsatzpumpe 44 zur Verfügung stellen kann und der keine Unterversorgung der Kühlung des Radsatzes im ersten Bereich 53 verursacht.

Führt die Abfrage des vierten Abfrageschrittes S5 zu einem positiven Abfrageergebnis, wird das Kühlventil 48 innerhalb des dritten Ansteuerbereiches C betrieben, während bei negativem Abfrageergebnis über einen fünften Abfrageschritt S6 überprüft wird, ob der in Richtung der Leitung 58 über das Kühlventil 48 geführte Hydraulikfluidvolumenstrom derart hoch ist, dass im Bereich des Doppelkupplungssystems 56 eine angeforderte Kühlleistung nicht erreicht wird. Dies ist dann der Fall, wenn der Minimalvolumenstrom, der über die Leitung 58 abgeführt wird, derart hoch ist, dass die Kühlung des Doppelkühlungssystems 56 nicht im gewünschten Umfang durchgeführt wird. Bei positivem Abfrageergebnis wird das Kühlventil 48 innerhalb des Ansteuerbereiches D1 betrieben.

Bei negativem Abfrageergebnis wird während eines sechsten Abfrageschrittes S7 überprüft, ob die Flügelzellenpumpe 43 einen größeren Hydraulikfluidvolumenstrom fördert, als in Richtung des Doppelkupplungssystems 56 zu dessen Kühlung geführt wird. Bei positivem Abfrageergebnis des sechsten Abfrageschrittes S7 wird das Kühlventil 48 innerhalb des ersten Ansteuerbereiches A betrieben, während bei negativem Abfrageergebnis zu einem Verzweigungsschritt S8 verzweigt wird, der einen Betrieb des Kühlventils 48 innerhalb des zweiten Ansteuerbereiches B auslöst.

Nachdem der jeweilige Ansteuerbereich A bis D2 des Kühlventils 48 über die vorbeschriebene Vorgehensweise bestimmt wurde, wird der Fördervolumenstrombedarf der Flügelzellenpumpe 43 in Abhängigkeit des jeweils ausgewählten Ansteuerbereiches A bis D2 bestimmt. Die vorbeschriebene Art der Ansteuerung des Kühlventils 48 ermöglicht eine situationsabhängige Einstellung der Förderleistung der Flügelzellenpumpe 43 und somit auch einer verbrauchsoptimalen hydraulischen Verlustleistung der Flügelzellenpumpe 43.

Grundsätzlich wird das Kühlventil 48 so angesteuert, dass der in Richtung des Doppelkupplungssystems 56 geführte Volumenstrom q56 und der in Richtung des Radsatzes geführte Volumenstrom q53 sich jeweils gemäß dem nachfolgenden formelmäßigen Zusammenhang einstellen:

$$q56 = f43 \bullet q43 + f44 \bullet q44$$

$$q53 = (q43 + q44) - q56$$

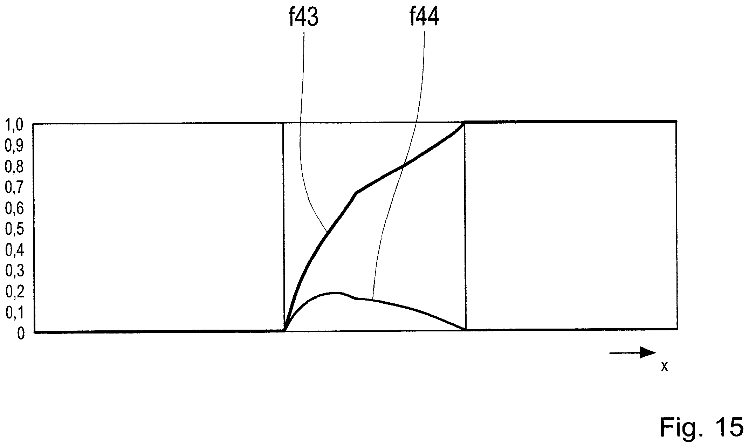

Dabei entspricht das Formelzeichen f43 einem Verteilungsfaktor des von der Flügelzellenpumpe 43 jeweils zur Verfügung gestellten Hydraulikfluidvolumenstromes q43 und das Formelzeichen f44 einem Verteilungsgrad des von der Radsatzpumpe 44 zur Verfügung gestellten Hydraulikfluidvolumenstromes q44 in Richtung des Doppelkupplungssystems 56 über dem Stellweg des Ventilschiebers 79 des Kühlventils 48. Verläufe der Kennlinien f43 und f44 der Flügelzellenpumpe 43 und der Radsatzpumpe 44 in Abhängigkeit der Position des Ventilschiebers 79 des Kühlventils 48 für die Versorgung des Doppelkupplungssystems 56 zeigt Fig. 15, wobei der Faktor f43 Werte zwischen 0 und 1 und der Faktor f44 Werte zwischen 0 und ca. 0,2 annimmt.

Um den jeweils im Bereich des Vorsteuerdruckregelventils 60 zur Einstellung der jeweils angeforderten Position des Ventilschiebers 79 des Kühlventils 48 anzulegenden Betätigungsstrom i60 bestimmen zu können, ist beispielsweise nachfolgend näher beschriebene Vorgehensweise durchführbar.

Der von der Flügelzellenpumpe 43 im optimalen Betriebspunkt zur Verfügung zu stellende Hydraulikfluidvolumenstrom q43 wird aus der Summe des zur Kühlung des Doppelkupplungssystems 56 erforderlichen Kühlölvolumenstroms q56 und dem für die Kühlung des Radsatzes zur Verfügung zu stellenden Kühlölvolumenstrom q53 bestimmt, wobei hiervon noch der von der Radsatzpumpe 44 zur Verfügung gestellte Hydraulikfluidvolumenstrom q44 subtrahiert wird. Anschließend werden die Kennlinien f43 und f44 aus Fig. 15 mit dem optimalen Hydraulikfluidvolumenstrom der Flügelzellenpumpe 43 und dem von der Radsatzpumpe 44 zur Verfügung gestellten Volumenstrom durchlaufen. Wiederum anschließend wird bei verschiedenen Stellungen des Vorsteuerdruckregelventils 60 überprüft, ob nachfolgende Matrix berechnet werden kann:

$$\begin{pmatrix} q56 \\ q53 \end{pmatrix} = \begin{pmatrix} f43 & 1-f44 \\ 1-f43 & f44 \end{pmatrix} \bullet \begin{pmatrix} q43 \\ q44 \end{pmatrix}$$

Dabei stellt die erste Klammer die sogenannte Verteilermatrix des Kühlventils 48 dar. Sofern die Bedingung der Matrix nicht erfüllbar ist, erfolgt die Ansteuerung des Vorsteuerdruckregelventils 60 gemäß dem vorbeschriebenen ersten Sonderfall, während dem sich das Kühlventil 48 in der sogenannten Mittellage befindet, die insbesondere bei hohen Kupplungslasten und geringen Radsatzlasten im Bereich des Getriebes 2 angesteuert wird.

Diese Vorgehensweise wird solange durchgeführt, bis die durch die Matrix aufgestellte Bedingung erfüllt ist, wobei die in Abhängigkeit des jeweils vorliegenden Betriebszustandes einzustellende Position des Ventilschiebers 79 des Kühlventils 48 mit geringem Aufwand über eine Interpolation bestimmbar ist.

Grundsätzlich ist die Strategie für die Ansteuerung des Vorsteuerdruckregelventils 60 derart, dass der über die Flügelzellenpumpe 43 zur Verfügung gestellte Kühlölvolumenstrom auf ein Minimum reduziert wird, da die Flügelzellenpumpe 43 in einem höheren Druckbereich arbeitet als die Radsatzpumpe 44. Somit führt dies zu einer Reduzierung der Verluste im Bereich der beiden Pumpeneinheiten 43 und 44. Zusätzlich wird der Kühlölvolumenstrom der Radsatzpumpe 44 für die Kühlung des Radsatzes im ersten Bereich 53 minimiert, um Schleppmomente zu reduzieren. Der überschüssige von der Radsatzpumpe 44 zur Verfügung gestellte Hydraulikfluidvolumenstrom wird zur Kühlung des Doppelkupplungssystems 56 verwendet.

Um ein Leerlaufen von hydraulischen Leitungen zu verhindern, sind die Kupplungsventile 62 und 63 sowie ein der Hang-On-Kupplung 68 zugeordnetes weiteres Kupplungsventil 88 mit sogenannten Vorbefüllventilen 89 und 90 in Wirkverbindung bringbar. Üblicherweise teilen sich mehrere Druckregelventile von hydraulischen Betätigungsvorrichtungen von Getrieben ein gemeinsames Vorbefüllventil. Im Bereich der Vorbefüllventile wird jeweils ein gewisser Mindestdruck in Hydraulikleitungen eingestellt, wobei typische Werte zwischen 0,2 bis 0,4 bar vorliegen. Konstruktiv sind sie zumeist als federbelastete Sitzventile, wie Plattenventile, ausgeführt. Vorbefüllventile selbst können den konstanten Vorbefülldruck nur dann einregeln, wenn ein definierter Mindestdurchfluss zu dem zugehörigen hydraulischen Kontrollvolumen vorhanden ist. Wird der Mindestdurchfluss beispielsweise über zugehörige Ventilleckagen erreicht, ist das zugehörige Druckniveau beispielsweise kurz nach einem Start der Antriebsmaschine nicht definiert.

Aus Bauraum- und Kostengründen ist man zudem üblicherweise bemüht, die Anzahl der Vorbefüllventile zu minimieren. Dies führt jedoch nachteilhafterweise dazu, dass die zugehörige Netzwerktopologie deutlich komplexer wird, da mindestens zwei, oftmals bis zu fünf Druckregelventile an einen gemeinsamen Kanal anzubinden sind, der wiederum über ein entsprechendes Vorbefüllventil dann mit dem Ölsumpf, beispielsweise dem Ölraum 71 verbunden ist. Die Reduzierung der Anzahl der Bauteile wird also mit einer aufwändigeren Leitungsführung erzielt. Wird die jeweils zugehörige Vorsteuerstufe bzw. das jeweils zugehörige Vorsteuerdruckregelventil nicht bestromt, liegt vom zugehörigen Aktuator immer das Vorbefülldruckniveau an.

Bislang bekannte hydraulische Betätigungsvorrichtungen, die mit einer möglichst geringen Anzahl an Vorbefüllventilen für mehrere Druckregelventile ausgeführt sind, weisen unter anderem folgende Nachteile auf: Da die Aktuatoren, die Kupplungen, Schaltzylinder und dergleichen über die Vorbefüllleitungen entleert werden, sind die zugehörigen Leitungsquerschnitte vergleichsweise groß zu dimensionieren. Zusätzlich durchkreuzen die Vorbefüllleitungen je nach Anzahl der angebundenen Ventile das gesamte Gehäuse der Betätigungsvorrichtung. Dieser dafür erforderliche Bauraum steht nachteilhafterweise für die Entflechtung der restlichen Netzwerktopologie nicht mehr zur Verfügung.

Zusätzlich ist von Nachteil, dass die trotz der großen Kanalquerschnitte bei niedrigen Betriebstemperaturen wirksamen Leitungswiderstände deutlich verlängerte Ausschiebezeiten im Bereich der Kupplungen verursachen. Je nachdem, wie weit der Tankanschluss eines 3/2-Druckregelventils vom zugehörigen Vorbefüllventil entfernt ist, können diese Entleerzeiten zusätzlich auch deutlich streuen. Aus diesem Grund kann der Temperaturgang für Entleervorgänge die Spontaneität einzelner Schaltungen in nicht vernachlässigbarem Umfang beeinträchtigen. Darüber hinaus ist auch von Nachteil, dass eine aus Genauigkeitsgründen benötigte aktive Vorbefüllung Leckageverluste verursacht, die den Gesamtwirkungsgrad verringern.

Beim Öffnen einer Kupplung, d. h. bei einem schnellen Entleeren von mindestens einem der angeschlossenen Druckregelventile über ein Vorbefüllventil, tritt im Bereich der Vorbefüllleitung ein kurzzeitiger Druckanstieg auf. Alle anderen, vorzugsweise geöffneten Kupplungen bzw. Gangaktuatoren werden dann über ihr gemeinsames Vorbefülldruckniveau mit einem höheren Druckniveau beaufschlagt. Während derartiger Betriebssituationen kann beispielsweise keine Kalibrierung einer Drucksensorik durchgeführt werden. Sind im Bereich der Vorbefüllleitungen keine aktiven Vorbefüllungen in Abhängigkeit der aktuell vorliegenden Betriebstemperatur des Hydraulikfluidvolumens vorgesehen, besteht nachteilhafterweise die Möglichkeit, dass die Zeitspanne, die bis zum korrekten Wiederaufbau des Vorbefülldrucks vergeht, durchaus größer als 10 Sekunden sein kann. Somit sind besonders bei niedrigen Betriebstemperaturen eines Getriebes kaum Kalibriervorgänge durchführbar.

Die Kupplungsventile 62, 63 und 88 sowie die Druckregelventile 28 und 29 bzw. die Gangventile sind als sogenannte federbelastete Schieberventile ausgeführt. Das bedeutet, dass die Ventilschieber der Regelventile 62, 63, 88 bzw. 28, 29 ohne entsprechende Ansteuerung durch die zugehörige Vorsteuerstufe 83, 84, 85 bzw. 26 oder 27 von der jeweils anliegenden Federkraft gegen einen mechanischen Endanschlag geführt werden. Die Ventilschieber der Regelventile 62, 63, 88 bzw. 28 und 29 überfahren dabei vergleichsweise große Stellwege, um ausreichende Öffnungsquerschnitte zwischen einem Tankanschluss der Regelventile 62 bis 29 und der jeweils zugehörigen Vorbefüllleitung sicherzustellen. Sobald die zugehörigen Vorsteuerstufen 83, 84, 85 jeweils einen Vorsteuerdruck im Bereich der Regelventile 62, 63 und 88 anlegen, sind die Ventilschieber jeweils gegen die Federkraft aus der aktuell vorliegenden Endstellung zu verschieben. Die großen Stellwege verursachen im Steuer- und Regelverhalten deutliche Totzeiten zwischen dem Ansteuersignal und dem Zeitpunkt, zu dem sich der angeforderte Arbeitsdruck bzw. Kupplungsdruck einstellt. Dabei nimmt die Spontaneität des Druckaufbaus umso stärker ab, je größer der vom Ventilschieber jeweils zu durchfahrende Stellweg ist.

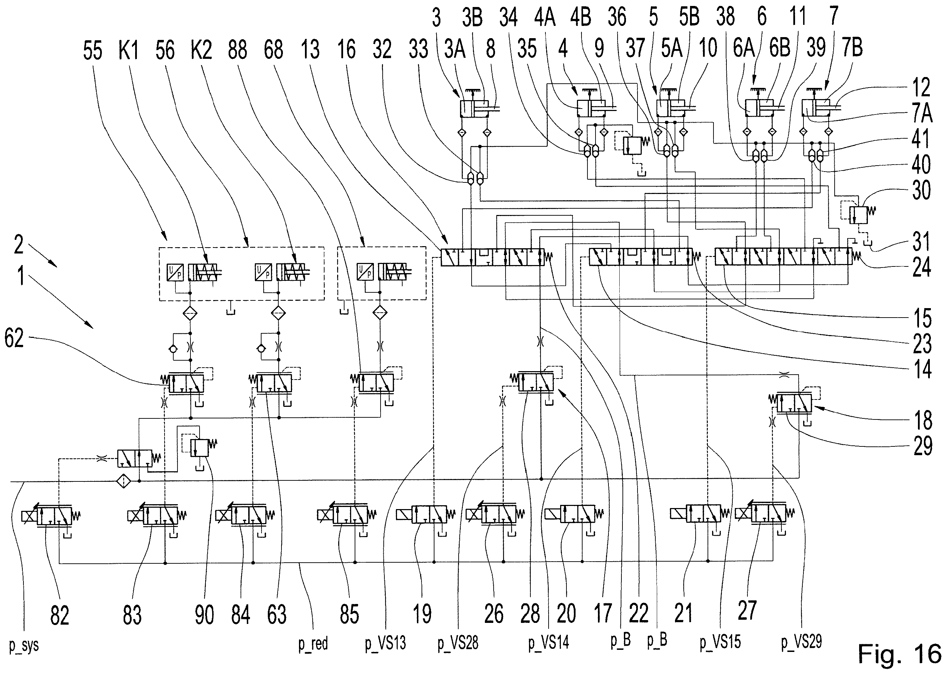

Die vorbeschriebenen und im Wesentlichen fünf Hauptnachteile werden durch ein in einen Ventilschieber integriertes Vorbefüllventil behoben bzw. durch eine in Fig. 16 dargestellte Hydrauliktopologie der hydraulischen Betätigungsvorrichtung 1 vermieden. Jedes der Druckregelventile 62, 63, 88 und 28, 29 ist direkt an den Ölsumpf bzw. an den gemeinsamen Ölraum angeschlossen. Dieser Anschluss ist konstruktiv direkt in der zugehörigen Gusstasche ausgeführt. Um ein

Leerlaufen in diesem Bereich der hydraulischen Betätigungsvorrichtung 1 zu vermeiden, sind die Druckregelventile 62 bis 29 in in Fig. 16 dargestelltem Umfang mit einer zum jeweils anlegbaren Vorsteuerdruck gleichwirkenden Federeinrichtung ausgeführt. Damit wird bei nicht anliegendem Vorsteuerdruck im Bereich der Druckregelventile 62 bis 29 jeweils ein eigener Vorbefülldruck über die Druckregelventile 62 bis 29 selbst eingeregelt.

Die in Fig. 16 gezeigte konstruktive Ausführung der hydraulischen Betätigungsvorrichtung 1 führt dazu, dass zwischen den Druckregelventilen 62 bis 29 keine Kopplungen über die Vorbefüllleitungen vorliegen. Zusätzlich führt die eigenständige Regelung des Vorbefülldruckes des Ventilschiebers der Druckregelventile 62 bis 29 dazu, dass eine aktive Vorbefüllung nicht mehr erforderlich ist.

<u>Bezugszeichen</u>

| 1 | Hydrauliksystem, hydraulische Betätigungsvorrichtung |
| 2 | Getriebe |
| 3 | Kolben-Zylinder-Einrichtung |
| 3A, 3B | Kolbenraum |
| 4 | Kolben-Zylinder-Einrichtung |
| 4A, 4B | Kolbenraum |
| 5 | Kolben-Zylinder-Einrichtung |
| 5A, 5B | Kolbenraum |
| 6 | Kolben-Zylinder-Einrichtung |
| 6A, 6B | Kolbenraum |
| 7 | Kolben-Zylinder-Einrichtung |
| 7A, 7B | Kolbenraum |
| 8 bis 12 | Schaltelement, Schaltstange |
| 13 bis 15 | Schaltventil |
| 16 | Ventileinrichtung |
| 17, 18 | Druckregelventileinheit |
| 19 bis 21 | Vorsteuerdruckventileinheit |
| 22 bis 24 | Federeinrichtung |
| 25 | Druckreduzierventil |
| 26, 27 | Vorsteuerdruckregelventil |
| 28, 29 | Druckregelventil |
| 30 | Druckbegrenzungsventil |
| 31 | Niederdruckbereich |
| 32 bis 41 | Kugelwechselventil |
| 42 | Pumpeneinrichtung |
| 43 | erste Pumpeneinheit, Flügelzellenpumpe |
| 44 | zweite Pumpeneinheit, Radsatzpumpe |
| 45 | Druckseite der ersten Pumpeneinheit |
| 46 | Primärdruckkreis |
| 47 | Systemdruckventil |
| 48 | Ventileinrichtung, Kühlventil |
| 48A bis 48G | Ventiltasche |
| 49 | Thermobypassventil |
| 50 | Thermoelement |

| 51 | Kühler |
| 52 | Bypassventil |
| 53 | erster Bereich des Sekundärdruckkreises |
| 54 | Sekundärdruckkreis |
| 55 | zweiter Bereich des Sekundärdruckkreises |
| 56 | Doppelkupplungssystem |
| 57 | Saugseite der zweiten Pumpeneinheit |
| 58 | Leitung |
| 59 | Federeinrichtung |
| 60 | Vorsteuerdruckregelventil |
| 61 | Radsatzkühlventil |
| 62, 63 | Kupplungsventil |
| 64 | Druckseite der zweiten Pumpeneinheit |
| 65 | Rückschlagventileinrichtung |
| 66 | Druckbegrenzungsventil |
| 67 | Parksperrensystem |
| 68 | Allradkupplung, Hang-On-Kupplung |
| 69 | Saugleitung |
| 70 | Filtereinrichtung |
| 71 | gemeinsamer Ölraum |
| 72 | erster Ölraum |
| 73 | zweiter Ölraum |
| 74 | Saugleitung |
| 75 | Gehäuse |
| 76 | erstes Gehäuseteil, Ventilplatte |
| 77 | zweites Gehäuseteil, Kanalplatte |
| 78 | Schnittstelleneinrichtung |
| 79 | Ventilschieber |
| 80 | Rückschlagventileinrichtung, Radsatzpumpenventil |
| 81 bis 85 | Vorsteuerdruckregelventil |
| 86 | Trennventil |
| 87 | Blendenventil |
| 88 | weiteres Kupplungsventil |
| 89 | Vorbefüllventil |
| 90 | Vorbefüllventil |
| 91 | Ventileinheit |
| A bis D2 | Ansteuerbereich des Kühlventils |
| A(x), B(x), C(x) | Öffnungsfläche |
| f43, f44 | Faktor |
| i60 | Betätigungsstrom |
| K1, K2 | Kupplung |
| p_B | Betätigungsdruck |
| p_red | Drucksignal |
| p_VS | Vorsteuerdruck |
| p_sys | Systemdruck |
| p64 | Förderdruck der Radsatzpumpe |
| q | Hydraulikfluidvolumenstrom |
| S1 bis S8 | Schritt |
| x | Stellweg des Ventilschiebers des Kühlventils |

## Patentansprüche

1. Hydrauliksystem (1) eines Getriebes (2) mit mehreren Druckregelventilen, darunter mehrere Kupplungsventile (62, 63, 88) sowie erste Druckregelventile (28, 29), wobei im Bereich aller Druckregelventile (62, 63, 88, 28, 29) ein anliegender Druck (p_sys) in Abhängigkeit einer jeweils an einem Ventilschieber (79) betriebszustandsabhängig angreifenden Gesamtkraftkomponente ein stromab einzustellendes Druckniveau einregelbar ist, wobei sich die Gesamtkraftkomponente in Abhängigkeit einer jeweils am Ventilschieber (79) anlegbaren Vorsteuerkraftkomponente, einer Betätigungskraftkomponente und einer in Abhängigkeit des stromab vorliegenden Druckniveaus stehenden Regelkraftkomponente einstellt, wobei die Vorsteuerkraftkomponente und die Betätigungskraftkomponente der ersten Druckregelventile (28, 29) jeweils gleichwirkend in Richtung einer ersten Endstellung eines Ventilschiebers eines ersten Druckregelventils (28, 29) am Ventilschieber anlegbar sind, in der der Bereich stromauf des ersten Druckregelventils (28, 29) mit dem Bereich stromab des ersten Druckregelventils über das erste Druckregelventil verbunden ist, während der Druck stromab eines ersten Druckregelventils (28, 29) der Vorsteuerkraftkomponente und der Betätigungskraftkomponente entgegenwirkend in Richtung einer zweiten Endstellung des Ventilschiebers am Ventilschieber anlegbar ist, in der der Bereich stromab eines Druckregelventils (62,63,88,28,29) mit einem Niederdruckbereich (71) verbunden ist, **dadurch gekennzeichnet, dass** die Kupplungsventile (62, 63, 88) über eine vorsteuerbare Ventileinheit (91) mit einem einen Druck (p_sys) eines Primärdruckkreises (46) führenden Bereich oder mit einer weiteren Ventileinheit (89) in Wirkverbindung bringbar ist, wobei die weitere Ventileinheit (89) als Druckbegrenzungsventil ausgeführt ist und stromauf der weiteren Ventileinheit (89) ein vordefiniertes Druckniveau einstellt und stromab mit einem Niederdruckbereich (71) in Verbindung steht.

2. Hydrauliksystem nach Anspruch 1, **dadurch gekennzeichnet, dass** die ersten Druckregelventile (28, 29) direkt mit einem einen Druck (p_sys) eines Primärdruckkreises (46) führenden Bereich gekoppelt ist.

3. Hydrauliksystem nach einem der Ansprüche 1 oder 2, **dadurch gekennzeichnet, dass** die Vorsteuerkraftkomponente in Abhängigkeit eines im Bereich eines Vorsteuerdruckregelventils (83, 84, 85, 26, 27) einstellbaren Vorsteuerdrucks (p_VS28, p_VS29) einstellbar ist, der im Bereich einer Steuerfläche des Ventilschiebers eines der Druckregelventile (62,63,88,28,29) anlegbar ist.

**4.** Hydrauliksystem nach einem der Ansprüche 1 bis 3, **dadurch gekennzeichnet, dass** die Betätigungskraftkomponente einer am Ventilschieber eines der Druckregelventile (62,63,88,28,29) angreifenden Federkraft einer Federeinrichtung entspricht.

**5.** Hydrauliksystem nach einem der Ansprüche 1 bis 4, **dadurch gekennzeichnet, dass** die Druckregelventile (62 bis 29) als 3/2-Wegeventile ausgeführt sind.

**6.** Hydrauliksystem nach Anspruch 4 oder 5, **dadurch gekennzeichnet, dass** die Vorsteuerkraftkomponente und die Betätigungskraftkomponente der Kupplungsventile (62,63,88) entgegengerichtet sind.

**7.** Hydrauliksystem nach Anspruch 4 oder 5, **dadurch gekennzeichnet, dass** die Vorsteuerkraftkomponente und die Betätigungskraftkomponente der Kupplungsventile (62,63,88) gleichgerichtet sind.

## Claims

**1.** Hydraulic system (1) of a transmission (2) having a plurality of pressure regulating valves, among them a plurality of clutch valves (62, 63, 88) and first pressure regulating valves (28, 29), it being possible for a prevailing pressure (p_sys) to be adjusted in the region of all pressure regulating valves (62, 63, 88, 28, 29) to a pressure level to be set downstream in a manner which is dependent on an overall force component which acts in each case on a valve slide (79) in a manner which is dependent on the operating state, the overall force component being set in a manner which is dependent on a pilot control force component which can be applied in each case on the valve slide (79), an actuating force component and a regulating force component which is dependent on the pressure level which prevails downstream, it being possible for the pilot control force component and the actuating force component of the first pressure regulating valves (28, 29) to be applied at the valve slide in a respectively identically acting manner in the direction of a first end position of a valve slide of a first pressure regulating valve (28, 29), in which first end position the region upstream of the first pressure regulating valve (28, 29) is connected to the region downstream of the first pressure regulating valve via the first pressure regulating valve, whereas the pressure downstream of the first pressure regulating valve (28, 29) of the pilot control force component and the actuating force component can be applied at the valve slide in a counteracting manner in the direction of a second end position of the valve slide, in which second end position the region downstream of a pressure regulating valve (62, 63, 88, 28, 29) is connected to a low pressure region (71), **characterized in that** the clutch valves (62, 63, 88) can be brought into an operative connection via a valve unit (91) which can be pilot controlled to a region which conducts pressure (p_sys) of a primary pressure circuit (46) or to a further valve unit (89), the further valve unit (89) being configured as a pressure limiting valve and setting a predefined pressure level upstream of the further valve unit (89), and being connected downstream to a low pressure region (71).

**2.** Hydraulic system according to Claim 1, **characterized in that** the first pressure regulating valves (28, 29) are coupled directly to a region which conducts pressure (p_sys) of a primary pressure circuit (46).

**3.** Hydraulic system according to either of Claims 1 and 2, **characterized in that** the pilot control force component can be set in a manner which is dependent on a pilot control pressure (p_VS28, P_VS29) which can be set in the region of a pilot control pressure regulating valve (83, 84, 85, 26, 27) and can be applied in the region of a control face of the valve slide of one of the pressure regulating valves (62, 63, 88, 28, 29).

**4.** Hydraulic system according to one of Claims 1 to 3, **characterized in that** the actuating force component corresponds to a spring force of a spring device, which spring force acts on the valve slide of one of the pressure regulating valves (62, 63, 88, 28, 29).

**5.** Hydraulic system according to one of Claims 1 to 4, **characterized in that** the pressure regulating valves (62 to 29) are configured as 3/2-way valves.

**6.** Hydraulic system according to Claim 4 or 5, **characterized in that** the pilot control force component and the actuating force component of the clutch valves (62, 63, 88) are directed in opposite directions.

**7.** Hydraulic system according to Claim 4 or 5, **characterized in that** the pilot control force component and the actuating force component of the clutch valves (62, 63, 88) are directed in the same direction.

## Revendications

**1.** Système hydraulique (1) d'une boîte de vitesses (2) comprenant plusieurs vannes de régulation de pression, parmi lesquelles plusieurs vannes de couplage (62, 63, 88) ainsi que des premières vannes de régulation de pression (28, 29), une pression (p_sys) appliquée dans la zone de toutes les vannes de régulation de pression (62, 63, 88, 28, 29) pouvant être régulée en fonction d'une composante de force totale, qui sollicite respectivement un tiroir de vanne (79) en fonction de l'état opérationnel, à un niveau de pression à régler en aval, la composante de force totale se réglant en fonction d'une composante de force de commande pilote pouvant être appliquée respectivement au tiroir de vanne (79), d'une composante de force d'actionnement et d'une composante de force de régulation qui se trouve en dépendance du niveau de pression présent en aval, la composante de force de commande pilote et la composante de force d'actionnement des premières vannes de régulation de pression (28, 29) pouvant être appliquées au tiroir de vanne respectivement à action égale dans la direction d'une première position finale d'un tiroir de vanne d'une première vanne de régulation de pression (28, 29), position finale dans laquelle la zone en amont de la première vanne de régulation de pression (28, 29) est reliée à la zone en aval de la première vanne de régulation de pression par le biais de la première vanne de régulation de pression, alors que la pression en aval d'une première vanne de régulation de pression (28, 29) peut être appliquée au tiroir de vanne en opposition à la composante de force de commande pilote et à la composante de force d'actionnement dans la direction d'une deuxième position finale du tiroir de vanne, dans laquelle la zone en aval d'une vanne de régulation de pression (62, 63, 88, 28, 29) est reliée à une zone de basse pression (71), **caractérisé en ce que** les vannes de couplage (62, 63, 88) peuvent être amenées en liaison fonctionnelle, par le biais d'une unité de vanne (91) actionnable par commande pilote, avec une zone conduisant une pression (p_sys) d'un circuit de pression primaire (46) ou avec une unité de vanne supplémentaire (89), l'unité de vanne supplémentaire (89) étant réalisée sous la forme d'une vanne de limitation de pression et réglant un niveau de pression prédéfini en amont de l'unité de vanne supplémentaire (89) et se trouvant en liaison en aval avec une zone de basse pression (71)

2. Système hydraulique selon la revendication 1, **caractérisé en ce que** les premières vannes de régulation de pression (28, 29) sont connectées directement à une zone conduisant une pression (p_sys) d'un circuit de pression primaire (46).

3. Système hydraulique selon l'une des revendications 1 et 2, **caractérisé en ce que** la composante de force de commande pilote est réglable en fonction d'une pression de commande pilote (p_VS28, p_VS29) réglable dans la zone d'une vanne de régulation de pression pilote (83, 84, 85, 26, 27) qui peut être appliquée dans la zone d'une surface de commande du tiroir de vanne de l'une des vannes de régulation de pression (62, 63, 88, 28, 29).

4. Système hydraulique selon l'une des revendications 1 à 3, **caractérisé en ce que** la composante de force d'actionnement correspond à une force de ressort d'un dispositif à ressort qui sollicite le tiroir de vanne de l'une des vannes de régulation de pression (62, 63, 88, 28, 29).

5. Système hydraulique selon l'une des revendications 1 à 4, **caractérisé en ce que** les vannes de régulation de pression (62 à 29) sont réalisées sous la forme de distributeurs à 3/2 voies.

6. Système hydraulique selon la revendication 4 ou 5, **caractérisé en ce que** la composante de force de commande pilote et la composante de force d'actionnement des vannes de couplage (62, 63, 88) sont dirigées en sens inverse.

7. Système hydraulique selon la revendication 4 ou 5, **caractérisé en ce que** la composante de force de commande pilote et la composante de force d'actionnement des vannes de couplage (62, 63, 88) sont dirigées dans le même sens.

Fig. 1

EP 3 134 662 B1

Fig. 2

EP 3 134 662 B1

EP 3 134 662 B1

1

78    75

76        77

Fig. 2a

EP 3 134 662 B1

p_VS48    79  48G  48F         q58

                              48E

                              48D

                              q53

                              48C

                              q55

qzu      48    59      48A 48B

Fig. 3

Fig. 4

EP 3 134 662 B1

Fig. 5

EP 3 134 662 B1

A(x)  C(x)  B(x)

0   x1   x3   x4  x2   x

Fig. 6

Fig. 7

Fig. 8

p_VS48

45  57  44  64  80  46  65  47      79  p64  66  53

87
86
43
42
69
70
71

48
55
59
50
49
52

EP 3 134 662 B1

1    82   2    p_sys    25  81  p_red  60  51

Fig. 9

EP 3 134 662 B1

Fig. 10

28

Fig. 11

EP 3 134 662 B1

Fig. 12

Fig. 13

EP 3 134 662 B1

S1 ⬭

S2 ◇ ——ja—————————————————— D2

  │nein

S3 ◇ ——ja—————————————————— D

  │nein

S4 ◇ ——ja—————————————————— C

  │nein

S5 ◇ ——ja—————————————————— C

  │nein

S6 ◇ ——ja—————————————————— D1

  │nein

S7 ◇ ——ja—————————————————— A

  │nein

S8 ◇ ——————————————————————— B ⟶

Fig. 14

Fig. 15

Fig. 16

EP 3 134 662 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19943939